# EUROPEAN PATENT SPECIFICATION

(11) **EP 3 154 693 B1**
(45) Date of publication and mention of the grant of the patent: **03.11.2021**
(21) Application number: 15733572.0
(22) Date of filing: 11.06.2015
(51) Int. Cl.: B01L 3/00, B01L 7/00, G01N 21/27, G01N 21/64, G01N 35/00

(54) **METHOD FOR PERFORMING A SAMPLE ASSAY WITH A MICROFLUIDIC CARTRIDGES WITH INTEGRATED ASSAY CONTROLS**
VERFAHREN ZUR DURCHFÜHRUNG EINES PROBENTESTS IN EINER MIKROFLUIDISCHEN PATRONE MIT INTEGRIERTEN TESTSTEUERUNGEN
PROCÉDÉ POUR EFFECTUER UN ÉCHANTILLON DE DOSAGE AVEC UNE CARTOUCHE MICROFLUIDIQUE À TÉMOINS DE DOSAGE INTÉGRÉS

(30) Priority: 11.06.2014 US 201462010915 P
(43) Date of publication of application: 19.04.2017
(73) Proprietor: PerkinElmer Health Sciences, Inc., Waltham, MA 02451 (US)
(72) Inventor: HOFFMAN, Daniel, Redmond, Washington 98052 (US); BERGDAHL, Asa, Redmond, Washington 98052 (US); COUCH, Megan, Redmond, Washington 98034 (US); RIVERA, Rafael, Redmond, Washington 98052 (US); BRAGD, Matthew Scott, Redmond , Washington 98052 (US); LOFQUIST, Alan, K., Kirkland, Washington 98034 (US); KOLB, Andrew, Seattle, Washington 98144 (US); KAY, Justin, L., Renton, Washington 98059 (US)
(74) Representative: Grünecker Patent- und Rechtsanwälte PartG mbB
(86) International application number: PCT/US2015/035419
(87) International publication number: WO 2015/191916

(56) References cited:
- WO-A1-2012/071069
- WO-A2-2011/094577
- US-A1- 2012 071 342
- None

## Description

### BACKGROUND

### Technical Field

The present invention generally relates to a method of performing a sample assay with a microassay cartridge . Further, there are described microassay cartridges with integrated assay controls and a compact fluorescence detection instrument with optical, thermal, mechanical and pneumohydraulic systems for use in diagnostic assays.

A microassay cartridge with a first molded housing, a second molded housing, a sample inlet, a laminate layer between the first molded housing and the second molded housing, an assay well assembly, and a layer of pneumatic ports is disclosed in WO2011/094577 A2.

### Description of the Related Art

The role of molecular diagnostics is critical in today's global health care environment. In the developing world, 95% of deaths are due to a lack of proper diagnostics and the associated follow-on treatment of infectious diseases; e.g., acute respiratory infections (ARIs), malaria, HIV, and tuberculosis (TB) (Yager, P et al, Annu Rev Biomed Eng 10:107-144, 2008). Recent pandemics, such as the 2009 H1N1 Influenza A pandemic, have accentuated the need for tools to effectively detect and control infectious diseases. Factors including rapid pathogen mutation rates, transformation of nonhuman pathogens into human pathogens, and recombination of non human pathogen with human pathogens have added to the challenge of managing novel infectious diseases (Kiechle, FL et al., Clin Lab Med 29(3):555-560, 2009). Increased global mobility has aided the rapid spread of infectious diseases from region of origin to other parts of the world as seen during the 2009 H1N1 pandemic. Current laboratory culture methods necessary to detect infectious pathogens take a day or more to provide results. These issues highlight the need for rapid, portable diagnostic point-of-care (POC) devices at ports of entry to prevent global spread of infections.

In both the developed and developing worlds, diagnostic testing for certain types of infections needs to be repeated periodically to measure response to therapy and monitor the disease condition. One such case is monitoring the viral load (number of viral particles per milliliter of blood) for infections like HIV (Human immunodeficiency virus) and hepatitis C. Sub-Saharan Africa is a region heavily affected by the AIDS pandemic. The lack of standard laboratory facilities and trained laboratory technicians in this region is a serious bottleneck. Similar problems exist in medically underserved areas of the USA. Rapid, low-cost diagnostic tools that can be dispersed throughout a community for easy access, possibly even in the home, would provide substantial benefit by allowing more rapid diagnosis and monitoring of disease and infection.

Since its inception, microfluidics has shown a tremendous potential to become an important tool for in vitro diagnostics (IVD). The "Holy Grail" of microfluidics-based IVD is to offer a hand-held or portable, standalone, self-calibrating, automated, and inexpensive device that is capable of performing rapid, specific, sensitive, and quantitative test for multiple analytes using minimal raw samples. However, to date, only very limited microfluidic devices have been successfully developed and commercialized for such applications. One significant technical challenge facing development of standalone microfluidic devices is system integration, which requires combination of pneumatic, fluidic, mechanical, electronic, and optical units into a limited space. Interfacing and integrating these functional units into a single robust microfluidic device that can efficiently prepare a test sample for analysis and accurately detect the target analyte(s) remains an on-going challenge.

Other challenges relate to assay validation and quality control. Current standards mandated by regulatory agencies require that the accuracy and reliability of all assay procedures used in diagnostic-based health care decisions are monitored and validated through the use of controls. These controls include process controls and positive and negative controls that verify functionality of the extraction, amplification, and diagnostic processes. Process controls are performed on the same sample and in the same test well as the test assay, but use a different set of primers and/or probes to detect a control target that is always present in the assayed sample. In contrast, positive and negative controls are performed in separate assay wells using the same primers and/or probes as the test sample and a known amount of assay target embedded in the well (zero in the case of the negative control). While the few commercially available microfluidic diagnostic systems, such as the BD Diagnostics BC MAX™ System and the Cepheid GeneXpert® system run on-card process controls, neither system provide test cards with integrated positive and negative controls. External controls may be provided by test manufacturer as an accessory control kit, sourced by a third party vendor as specified in the product package insert, or by customers sourcing real samples.

There are several significant disadvantages in the need to run external positive and negative assay controls. When positive and negative assay controls are not part of the integrated test cartridge, inherent lot-to-lot reagent variations and/or degradation can compromise validation of assay results. For the end-user, there is the added cost and time required to acquire additional control reagents and devices and perform the separate control assays. Moreover, it is often left up to the end-user to determine the appropriate frequency of control testing, which places an additional onus of the user. These disadvantages become increasingly significant when multiplex assays are run and are of particular concern in resource-poor settings.

An additional challenge is portability. Although the benefits of the use of fluorophores as probes for in-vitro diagnostic assays are well known, the most commonly available forms of equipment for such assays are large, complex to use, relatively slow and rely on expensive confocal optics. These attributes make much equipment unsuitable for fully integrated "sample- to-answer" testing in remote locales and on-site at the point of care, where such equipment is required to be rugged, fast, compact, inexpensive, and easy to use.

A simultaneous solution of these interlocking problems is only achieved by extensive experimentation and development, most often guided by trial and error in this highly unpredictable art. Thus there is a need in the art for numerous improvements, elements of which are the subject of the disclosure herein.

WO 2011/094577 A2 discloses a microfluid cartridge having an inlet into which a sample is inserted. Within the microfluid cartridge, pouches are provided, which contain a buffer that is mixed with the sample given into the inlet. The sample is mixed with the buffer and transferred from the first place to the tip section. A further assaying setup, wherein a microfluid cartridge is used can be connected via a sample inlet well to a microfluid sub-unit is disclosed in WO 2012/071069 A1

### BRIEF SUMMARY

In particular, the present invention relates to a method of performing a sample assay with a microassay cartridge, which method has the features defined in claim 1. Further preferred embodiments are defined in the dependent claims.

In the following, there are described some arrangements. However, the scope of protection is defined by the claims. These arrangements are described as they are helpful for understanding the present invention.

Arrangements addresses the problem of reliable and valid detection of fluorescent signals in a microfluidic cartridge by providing several improved cartridge features and integrating both process controls and positive and negative assay controls into the cartridge design. The microfluidic cartridges offer several considerable advantages to the end-user by eliminating the need to run external assay controls for molecular tests. The integrated positive and negative assay controls also provide for more accurate methods of scoring diagnostic test results as positive or negative for the analyte or analytes of interest.

Some arrangements disclosed herein relate generally to microassay cartridges assembled from a first molded housing enclosing a pneumatic circuit, a second molded housing enclosing a hydraulic circuit, a sample inlet connected to the hydraulic circuit, a laminate layer between the first and second molded housings containing a plurality of pneumohydraulic membranes, an assay well assembly connected to the hydraulic circuit, and an array of pneumatic ports for receiving pneumatic pulses that are connected to the pneumatic circuit in the first molded housing and which control the operation of the pneumohydraulic membranes. It has been advantageously discovered that segregating the pneumatic circuit into the first molded housing and the hydraulic circuit into the second molded housing increases the robustness of the cartridge by preventing crossing of the pneumatic and hydraulic lines, which has been discovered to contribute to functional failures.

The hydraulic circuit of the cartridge includes a test assay circuit that is connected to the sample inlet and a control assay circuit that is not connected to the sample inlet. The control sample circuit is split into a positive control assay circuit and a negative control assay circuit. In some aspects the positive control assay circuit is connected to the negative control assay circuit while in other aspects, they are not connected. Each assay and control circuit may further be connected to a plurality of assay wells, in some aspects each circuit is connected to from one to three assay wells. In a preferred aspect, each circuit is connected to three assay wells. In another aspect, each of the assay wells is configured to run an additional process control. In another aspect, the positive control assay wells are embedded with a positive control nucleic acid template.

The microassay cartridge may include a nucleic acid capture assembly that is assembled from a hollow housing and a nucleic acid capture membrane supported in the interior of the housing. In some aspects, the nucleic acid capture membrane fabricated from silica fibers. In other aspect, the nucleic acid capture assembly also includes two support media that support the upper and lower surfaces of the capture membrane. The support media may be referred to as "frits' and fabricated from POREX®. Alternatively, the support media may be polypropylene washer-type structures.

In other aspects, the microassay card also includes an assay well assembly that incorporates a PCR well layer with a plurality of assay wells for conducting both amplification and fluorescent detection of target sequences. In some aspects the PCR amplification is endpoint PCR and in others it is realtime PCR, for example, for performing quantitative PCR.

In yet other aspects, the first molded housing of the microassay card includes optical detection windows that overly the assay wells of the assay well assembly. The optical detection windows are formed from diamond-shaped cuts in the housing in which the cut in the upper surface of the housing is larger than the cut in the lower surface of the housing such as to create angled sides that slant inward from top to bottom. It has been found that detection of emitted fluorescent light from wells with such angled sides is significantly enhanced. Moreover, the diamond-shaped geometry of the well has been found to advantageously facilitate wetting of the well without the entrainment of bubbles. Bubble formation in microfluidic devices has been a long-standing and considerable technical problem in the art. In another aspect, an optically transparent cover layer is placed between the assay wells and the optical windows in the first housing. The cover layer advantageously prevents material from leaking out of the assay wells, while not interfering with optical detection.

In other aspects a plurality of reagent packs are loaded into the upper molded housing. These reagents packs contain all the liquid reagents necessary for sample preparation, such as those required for cell lysis and nucleic acid extraction, wash, and elution from the capture membrane. The microassay card is configured to hold from one to six reagent packs. In some aspects, the reagent packs may be formed from foil and glued into the first molded housing to form an airtight seal. In other aspects, sharps are placed below each reagent pack in order to puncture the packs to release the reagent when required by pneumatic activation. The sharps may be formed from a metal (e.g. steel or the like) and have a barb that projects at an angle of around 75 degrees relative to the bottom of the housing. This configuration has been found to achieve superior shearing of foil material and prevent pierced edges from resealing upon themselves, which impedes the release of the liquid contents. In yet other aspects, springs may be placed between the sharps and the foils packs to protect the packs from premature or inappropriate rupture. The springs have an internal spring force that is only overcome upon by pneumatic forces originating from the host instrument. Once this force is overcome, the springs "snap" down abruptly, which happily accelerates rupture of the foil packs.

In other aspects the pneumatic ports of the microassay card are fit with aerosol filter plugs, which may be formed of a liquid-swellable material. These plugs trap liquid as well as aerosolized material, such as nucleic acids, thus greatly reducing the likelihood of instrument - cartridge cross contamination.

In another aspect, the positive and negative pressure states that are used to control the pneumohydraulic membranes and hydraulic circuit functions range from +150 to -50 kPA, for example in some arrangements the positive and negative pressure states are selected from the group consisting of +150, +100, +70, 0 (ambient), -35, and -50 kPA.

In another aspect, the microassay card is sealed to the host instrument with a single-use sealing gasket fixed to the card.

Other arrangements relate generally to microassay systems for performing a sample assay including a disposable microassay cartridge that docks to a host instrument and has a hydraulic circuit including a test assay circuit and a control assay circuit split into a positive control assay circuit and a negative control assay circuit where the hydraulic circuit is controlled by a pneumatic circuit that interfaces with pneumatic ports that each convey a pneumatic pressure state from the host instrument and a host instrument with a pneumatic manifold that connects to the pneumatic circuit of the cartridge and to pneumatic fluid sources to convey several pneumatic pressure states to the cartridge and a detector head with one to five detection channels for detecting optical signals in a test sample.

In other aspects, the host instrument also includes at least one Peltier thermal pump that may provide thermocycling capacities to the wells of the assay well assembly. In other aspects, the host instrument also includes at least one heat block that may heat regions of the hydraulic circuit. It has been found that providing heat during cell lysis and nucleic acid extraction procedures significantly increases efficiency.

In other aspects, the detector head of the host instrument scans the cartridge on discrete paths that are defined by reference points that are spatial coordinates is pre-determined during host instrument calibration. It has been found that scanning along such short discrete paths, as opposed to a continuous path traversing the entire length of the cartridge detection windows, significantly reduces the time required to perform a cartridge scan. Such increased efficiency becomes increasingly important as the number of assay wells to be scanned increases in the system.

In yet other aspects, the system may include a single-use gasket to join the pneumatic interface ports of the cartridge to the pneumatic manifold of the host instrument and aerosol filter plugs set into the ports to prevent contamination.

Other arrangements relate generally to methods of performing a controlled assay for a target fluorescent signal associated with a pathogenic condition, the methods including scanning a sample well in a test assay circuit with the system of above, where the target fluorescent signal, if present, is detected in a first optical channel of the detector head and a process control fluorescent signal associated with an endogenous component, if present, is detected in a second optical channel of said detector head, scanning a sample well in a positive control assay circuit for a positive control fluorescent signal with the system, where the positive control fluorescent signal, if present, is detected in the first optical channel of said detector head, scanning a sample well in a negative control assay circuit for a negative control fluorescent signal with the system, where the negative control fluorescent signal, if present, is detected in the first optical channel of said detector head; and reporting the first target control signal as a valid assay result if and only if the second fluorescent process control signal is detected, the positive control first fluorescent signal is detected, and the negative control first fluorescent signal is not detected.

In other aspects the test assay circuit, the positive control assay circuit, and the negative control assay circuit each include up to three assay wells, each of which is for analysis of a unique target.

In other aspects the method includes the step of comparing the target fluorescent signal to the positive control fluorescent signal and the negative control fluorescent signal to score the sample as positive or negative for the pathogenic condition. In yet other aspects, the step of comparing includes calculating a first ratio, which is the ratio of the target fluorescent signal to the positive control fluorescent signal and calculating a second ratio, which is the ratio of the target fluorescent signal to the negative control fluorescent signal and comparing the first and second ratios to a validation ratio. In yet other aspect, the sample is scored positive if the first ratio is greater than the validation ratio and the sample is scored as negative if the second ratio is less than the validation ratio.

The method includes comparing the target fluorescent signal to the positive control fluorescent signal to quantitate the relative abundance of the sample target.

### BRIEF DESCRIPTION OF THE SEVERAL VIEWS OF THE DRAWINGS

FIG. 1 is a perspective view of an instrument and a microfluidic cartridge showing animated insertion of the cartridge in the docking bay.
FIG. 2 is a bloc diagram providing an overview of the functional units of the apparatus.
FIGS. 3A and 3B are perspective views of an insertable microassay cartridge for use with the detection system .
FIG. 4 is a perspective view of a microassay cartridge with the coverlid removed showing various integrated features.
FIG. 5 is an exploded view of a microassay cartridge depicting the layered structure of the assembly.
FIG. 6A is a plan view showing details of the lower surface of the first molded housing of a microassay cartridge.
FIG. 6B is a plan view showing details of the lower surface of the middle laminate layer of a microassay cartridge.
FIG. 6C is a plan view showing details of the upper surface of the second molded housing of a microassay cartridge.
FIG. 7 is a schematic representation of one arrangement of integrating functional features of a microassay cartridge into a system of valve and fluid logic.
FIG. 8A is an exploded isometric view depicting the components of a nucleic acid capture assembly.
FIG. 8B is a cross-sectional view of a nucleic acid capture assembly.
FIG. 9 is a perspective view of an assay well assembly.
FIG. 10 is a simplified representation of a floating stage with docking bay, optical bench, and instrument chassis, demonstrating conceptually that these components can be mounted at an angle "theta" relative to the ground plane.
FIG. 11 shows the heater block and Peltier heat pump assembly in exploded view.
FIG. 12 is an exploded view showing a microassay cartridge engaged with the instrument clamping mechanism.
FIG. 13 is a perspective view of a detector head with dual optical channels. One half of the housing is removed in order to view the internal components.
FIG. 14 is a schematic view of the internal optical components of a fluorescence detector with dual optical channels and LED intensity control circuit.
FIG. 15 is a schematic illustration of one arrangement of a generalized microassay device with integrated test assay circuit and control assay circuits
FIG. 16 is a schematic illustration of another arrangement of a generalized microassay device with integrated test assay circuit and control assay circuits.

### DETAILED DESCRIPTION

### Definitions

Test samples: Test samples include biological samples or "biosamples," which may be clinical specimens. Representative biosamples include, for example: blood, serum, plasma, buffy coat, saliva, wound exudates, pus, lung and other respiratory aspirates, nasal aspirates and washes, sinus drainage, bronchial lavage fluids, sputum, medial and inner ear aspirates, cyst aspirates, cerebral spinal fluid, stool, diarrhoeal fluid, urine, tears, mammary secretions, ovarian contents, ascites fluid, mucous, gastric fluid, gastrointestinal contents, urethral discharge, synovial fluid, peritoneal fluid, meconium, vaginal fluid or discharge, amniotic fluid, semen, penile discharge, or the like may be tested. Assay from swabs or lavages representative of mucosal secretions and epithelia are acceptable, for example mucosal swabs of the throat, tonsils, gingival, nasal passages, vagina, urethra, rectum, lower colon, and eyes, as are homogenates, lysates and digests of tissue specimens of all sorts. Mammalian cells are acceptable samples. Besides physiological or biological fluids, samples of water, industrial discharges, food products, milk, air filtrates, and so forth are also test specimens. In some arrangements, test samples are placed directly in the device; in other arrangements, pre-analytical processing is contemplated.

Bioassay Target Molecule: or "nucleic acid of interest", or "target molecule", or "test analyte" includes a nucleic acid or nucleic acids. Target nucleic acids include genes, portions of genes, regulatory sequences of genes, mRNAs, rRNAs, tRNAs, siRNAs, cDNA and may be single stranded, double stranded or triple stranded. Some nucleic acid targets have polymorphisms, deletions and alternate splice sequences.

Pathogen: an organism associated with an infection or infectious disease.

Pathogenic condition: a condition of a mammalian host characterized by the absence of health, i.e., a disease, infirmity, morbidity, or a genetic trait associated with potential morbidity.

Various arrangements include microfluidic devices capable of analysis of test samples comprising one or more target infectious agents. Exemplary target infectious agents include microorganisms and/or viruses with either a DNA-based genome or an RNA-based genome. In some arrangements, suitable viruses include, but are not limited to, Hepatitis B virus (HBV), Hepatitis C virus (HCV), human immunodeficiency viruses (HIV) I and II, influenza A virus, influenza B virus, respiratory syncytial viruses (RSV) A and B, human metapneumovirus (MPV), and/or herpes simplex viruses (HSV) I and/or II.

In other arrangements, viral infectious agents present in a test sample include, but are not limited to, influenza A, influenza B, RSV (respiratory syncytial virus) A and B, human immunodeficiency virus (HIV), human T-cell lymphocytotrophic virus, hepatitis viruses (e.g., Hepatitis B Virus and Hepatitis C Virus), Epstein-Barr Virus, cytomegalovirus, human papillomaviruses, orthomyxo viruses, paramyxo viruses, adenoviruses, corona viruses, rhabdo viruses, polio viruses, toga viruses, bunya viruses, arena viruses, rubella viruses, reo viruses, Norovirus, human metapneumovirus (MPV), Herpes simplex virus 1 and 2 (HSV-1 and HSV-2), West Nile virus, Yellow fever virus, Varicella zoster virus (VZV), Rabies virus, Rhinovirus, Rift Valley fever virus, Marburg virus, mumps virus, measles virus, Epstein-Barr Virus (EBV), human papilloma virus (HPV), Ebola virus, Colorado tick fever virus (CTFV), and/or rhinoviruses.

In different arrangements, bacterial infectious agents in a test sample include, but are not limited to, Escherichia coli, Salmonella, Shigella, Campylobacter, Klebsiella, Pseudomonas, Listeria monocytogenes, Mycobacterium tuberculosis, Mycobacterium avium-intracellulare, Yersinia, Francisella, Pasteurella, Brucella, Clostridia, Bordetella pertussis, Bacteroides, Staphylococcus aureus, Streptococcus pneumonia, B-Hemolytic strep., Corynebacteria, Legionella, Mycoplasma, Ureaplasma, Chlamydia, Clostridium difficile, Gardnerella, Trichomonas vaginalis, Neisseria gonorrhea, Neisseria meningitides, Hemophilus influenza, Enterococcus faecalis, Proteus vulgaris, Proteus mirabilis, Helicobacter pylori, Treponema palladium, Borrelia burgdorferi, Borrelia recurrentis, Rickettsial pathogens, Nocardia, Acitnomycetes and/or Acinetobacter.

In still other arrangements, fungal infectious agents in a test sample include, but are not limited to, Cryptococcus neoformans, Blastomyces dermatitidis, Histoplasma capsulatum, Coccidioides immitis, Paracoccicioides brasiliensis, Candida albicans, Aspergillus fumigautus, Phycomycetes (Rhizopus), Sporothrix schenckii, Chromomycosis, and/or Maduromycosis.

In more arrangements, parasitic agents present in a test sample include, but are not limited to, Plasmodium falciparum, Plasmodium malaria, Plasmodium vivax, Plasmodium ovale, Onchoverva volvulus, Leishmania, Trypanosoma spp., Schistosoma spp., Entamoeba histolytica, Cryptosporidum, Giardia spp., Trichimonas spp., Balatidium coli, Wuchereria bancrofti, Toxoplasma spp., Enterobius vermicularis, Ascaris lumbricoides, Trichuris trichiura, Dracunculus medinesis, trematodes, Diphyllobothrium latum, Taenia spp., Pneumocystis carinii, and/or Necator americanis.

Assay controls, or "run" controls, or "amplification" controls include positive controls and negative controls. Control materials may be obtained commercially, prepared in-house, or obtained from other sources. Positive-control material may be purified target nucleic acid, patient specimens containing the target nucleic acid, or controls produced by spiking the organism of interest, preferably inactivated, into specimens known not to contain the target. The positive control may be constructed so that it is at a concentration near the lower limit of detection of the assay. The concentration should be high enough to provide consistent positive results but low enough to challenge the detection system near the limit of detection. For multiplex systems, positive controls for each analyte are included. Positive control PCR reactions use the same primer, probe, and enzyme as the test sample that may contain the target to be assayed. A positive control has to occur in a separate reaction well from the sample being assayed.

A blank non-template control such as water or buffer may be used as a form of negative control. Negative controls may also be used to compensate for background signal generated by the reagents. Negative controls may be taken through the extraction process and contain all of the reaction reagents. A negative control may also be a specimen containing known non-target nucleic acid, such as patient specimens from non-infected individuals or specimens containing known non-target organisms or nucleic acids. A negative control PCR reaction uses the same primer, probe, and enzymes as the assay target and has to occur in a separate reaction well from the sample being assayed.

Process controls, or "internal controls", or "procedural controls": refers to a control target that is always present in the assayed sample or is added to the assay sample prior to nucleic acid extraction. This control verifies functionality of the extraction, amplification and detection processes. A process control must use a different primer set than the assay target. Depending on the system, the process control may need to use a different probe than the assay target.

Nucleic acid: The terms "nucleic acid," "polynucleotide," and "oligonucleotide" are used herein to include a polymeric form of nucleotides of any length, including, but not limited to, ribonucleotides and deoxyribonucleotides. Relatively short nucleic acid polymers are often used as "primers" or "probes". The definition encompasses nucleic acids from natural sources which can be methylated or capped, and also synthetic forms, which can contain substitute or derivatized nucleobases and may be based on a peptide backbone. Nucleic acids are generally polymers of adenosine, guanine, thymine, and cytosine and their "deoxy-" forms, but may also contain other pyrimidines such as uracil and xanthine, or spacers and universal bases such as deoxyinosine. Deoxynucleic acids may be single-stranded or double-stranded depending on the presence or absence of complementary sequences, and on conditions of pH, salt concentration, temperature, and the presence or absence of certain organic solvents such as formamide, n,n-dimethylformamide, dimethylsulfoxide, and n-methylpyrrolidone.

"Target nucleic acid sequence" or "template": As used herein, the term "target" refers to a nucleic acid sequence in a biosample that is to be amplified in the assay by a polymerase and detected. The "target" molecule can be present as a "spike" or as an uncharacterized analyte in a sample, and may consist of DNA, cDNA, gDNA, RNA, mRNA, rRNA, or miRNA, either synthetic or native to an organism. The "organism" is not limited to a mammal. The target nucleic acid sequence is a template for synthesis of a complementary sequence during amplification. Genomic target sequences are denoted by a listing of the order of the bases, listed by convention from 5' end to 3' end.

Reporter, "Label" or "Tag": refers to a biomolecule or modification of a biomolecule that can be detected by physical, chemical, electromagnetic and other related analytical techniques. Examples of detectable reporters include, but are not limited to, radioisotopes, fluorophores, chromophores, mass labels, electron dense particles, magnetic particles, dyed particles, QDots, spin labels, molecules that emit chemiluminescence, electrochemically active molecules, enzymes, cofactors, enzymes linked to nucleic acid probes, and enzyme substrates. Reporters are used in bioassays as reagents, and are often covalently attached to another molecule, adsorbed on a solid phase, or bound by specific affinity binding.

Probe: A "probe" is a nucleic acid capable of binding to a target nucleic acid by complementary base pairing with sufficient complementarity to form a stable double helix at room temperature. Probes may be labeled with reporter groups. Suitable labels that can be attached to probes include, but are not limited to, radioisotopes, fluorophores, chromophores, mass labels, electron dense particles, magnetic particles, spin labels, molecules that emit chemiluminescence, electrochemically active molecules, enzymes, cofactors, and enzyme substrates. Tools for selection of a probe sequence, length, and hybridization conditions are generally familiar to those skilled in the art.

Amplification: As used here, the term "amplification" refers to a "template-dependent process" that results in an increase in the concentration of a nucleic acid sequence relative to its initial concentration. A "template-dependent process" is a process that involves "template-dependent extension" of a "primer" molecule. A "primer" molecule refers to a sequence of a nucleic acid that is complementary to a known portion of the target sequence. A "template dependent extension" refers to nucleic acid synthesis of RNA or DNA wherein the sequence of the newly synthesized strand of nucleic acid is dictated by the rules of complementary base pairing of the target nucleic acid and the primers.

Amplicon refers to a double stranded DNA product of a prior art amplification means, and includes double stranded DNA products formed from DNA and RNA templates.

Two-tailed Amplicon refers to a double stranded DNA product of an amplification means in which tagged primer pairs are covalently incorporated, a first primer conjugated with a peptide hapten or epitope, a second primer conjugated with an affinity reporter, tag or "ligand". As used herein, the two-tailed amplicon functions as a "hetero-bifunctional" tether, and forms a molecular detection complex on a solid substrate.

Primer: as used herein, is a single-stranded polynucleotide or polynucleotide conjugate capable of acting as a point of initiation for template-directed DNA synthesis in the presence of a suitable polymerase and cofactors. Primers are generally at least 7 nucleotides long and, more typically range from 10 to 30 nucleotides in length, or longer. The term "primer pair" refers to a set of primers including a 5' "forward" or "upstream" primer that hybridizes with the complement of the 5' end of the DNA template to be amplified and a 3' "reverse" or "downstream" primer that hybridizes with the 3' end of the sequence to be amplified. Note that both primers have 5' and 3' ends and that primer extension always occurs in the direction of 5' to 3'. Therefore, chemical conjugation at or near the 5' end does not block primer extension by a suitable polymerase. Primers may be referred to as "first primer" and "second primer", indicating a primer pair in which the identity of the "forward" and "reverse" primers is interchangeable. Additional primers may be used in nested amplification.

Polymerases are enzymes defined by their function of incorporating nucleoside triphosphates, or deoxynucleoside triphosphates, to extend a 3' hydroxyl terminus of a primer molecule. For a general discussion concerning polymerases, see Watson, J. D. et al, (1987) Molecular Biology of the Gene, 4th Ed., W. A. Benjamin, Inc., Menlo Park, Calif. Examples of polymerases include, but are not limited to, E. coli DNA polymerase I, "Klenow" fragment, Taq-polymerase, T7 polymerase, T4 polymerase, T5 polymerase and reverse transcriptase. Examples of reverse transcriptases include HIV-1 reverse transcriptase from the human immunodeficiency virus type 1, telomerase, M-MuLV reverse transcriptase from the Moloney murine leukemia virus, and AMV reverse transcriptase from the avian myeloblastosis virus.

It should be noted that reverse transcriptase is commonly used in research to apply the polymerase chain reaction technique to RNA targets. The classical PCR technique can only be applied directly to DNA, but by using reverse transcriptase to synthesize cDNA from RNA, PCR analysis of RNA targets is possible. The technique is collectively called Reverse Transcription-Polymerase Chain Reaction (RT-PCR).

Complementary (with respect to nucleic acids) refers to two single-stranded nucleic acid sequences that can hybridize to form a double helix. The matching of base pairs in the double helix of two complementary strands is not necessarily absolute. Selectivity of hybridization is a function of temperature of annealing, salt concentration, and solvent, and will generally occur under low stringency when there is as little as 55% identity over a stretch of at least 14-25 nucleotides. Stringency can be increased by methods well known in the art. See M. Kanehisa, Nucleic Acids Res. 12:203 (1984). Regarding hybridization of primers, a primer that is "perfectly complementary" has a sequence fully complementary across the entire length of the primer and has no mismatches. A "mismatch" refers to a site at which the base in the primer and the base in the target nucleic acid with which it is aligned are not complementary.

Pre-loading is a term that means that reagents are added to the device prior to its end use, for example, during the device's manufacture. As such, solid reagents may be deposited on the device, for example, by drying a solution of the reagent by allowing the solvent in the reagent to evaporate. Alternatively, reagents may be pre-loaded in dehydrated form as disclosed in U.S. Patent Application Pub. No. 2012/0156750 to Battrell et al..

Reagent refers broadly to any chemical or biochemical agent used in a reaction, including enzymes. A reagent can include a single agent which itself can be monitored (e.g., a substance that is monitored as it is heated) or a mixture of two or more agents. A reagent may be living (e.g., a cell) or non-living. Exemplary reagents for a nucleic acid amplification reaction include, but are not limited to, buffer, metal ion (for example magnesium salt), chelator, polymerase, primer, template, nucleotide triphosphate, label, dye, nuclease inhibitor, and the like. Reagents for enzyme reactions include, for example, substrates, chromogens, cofactors, coupling enzymes, buffer, metal ions, inhibitors and activators. Not all reagents are reactants.

Specificity: Refers to the ability of an assay to reliably differentiate a true positive signal of the target biomarker from any background, erroneous or interfering signals.

Sensitivity: Refers to the lower limit of detection of an assay where a negative can no longer be reliably distinguished from a positive.

Stability: during storage, any compositional change measured in a parameter, for example activity, concentration, degradation, viscosity, pH, or particle composition, that is greater than 10% over time, denotes instability. Changes less than or equal to 10% connote stability. The time period over which stability is measured is relative depending on the intended utility of the composition. Accelerated stability at higher temperature is sometimes taken as a more speedy way of extrapolating stability over longer periods of time than are actually measured.

Endpoint: "Endpoint" or "datapoint" is used here as shorthand for a "result" from either qualitative or quantitative assays, and may refer to both stable endpoints where a constant plateau or level of reactant is attained, and to rate reactions, where the rate of appearance or disappearance of a reactant or product as a function of time (i.e., the slope) is the datapoint.

Microfluidic cartridge: a "device", "card", or "chip" with fluidic structures and internal channels having microfluidic dimensions. These fluidic structures may include chambers, valves, vents, vias, pumps, inlets, nipples, and detection means, for example. Generally, microfluidic channels are fluid passages having at least one internal cross-sectional dimension that is less than about 500 µm and typically between about 0.1 µm and about 500 µm. Microfluidic channels are fluid passages having at least one internal cross-sectional dimension that is less than 600 µm. The microfluidic flow regime is characterized by Poiseuille or "laminar" flow. The particle volume fraction and ratio of channel diameter to particle diameter (D/d) has a measurable effect on flow characteristics. (See for example, Staben M E et al. 2005. Particle transport in Poiseuille flow in narrow channels. Intl J Multiphase Flow 31:529-47, and references cited therein).

Microfluidic cartridges may be fabricated from various materials using techniques such as laser stenciling, embossing, stamping, injection molding, masking, etching, and three-dimensional soft lithography. Laminated microfluidic cartridges are further fabricated with adhesive interlayers or by thermal adhesive bonding techniques, such by pressure treatment of oriented polypropylene. The microarchitecture of laminated and molded microfluidic cartridges can differ.

Microfluidic channel: also termed "microchannel", is a fluid channel having variable length, but one dimension in cross-section less than 500 µm. Microfluidic fluid flow behavior in a microfluidic channel is highly non-ideal and laminar and may be more dependent on wall wetting properties, roughness, liquid viscosity, adhesion, and cohesion than on pressure drop from end to end or cross-sectional area. The microfluidic flow regime is often associated with the presence of "virtual liquid walls" in the channel. However, in larger channels, head pressures of 10 psi or more can generate transitional flow regimes bordering on turbulent, as can be important in rinse steps of assays.

Microchannels constructed of layers formed by extrusion molding may have more rounded channel profiles and a radius on each "via". The internal channel surfaces of injection molded parts are also somewhat smoother. The flow characteristics of the channels are significant because of the profound surface effects in the microflow regime. Surface tension and viscosity compound surface roughness effects. The most narrow dimension of a channel has the most profound effect on flow. It follows that flow in channels that are based on rectangular or circular cross-sectional profiles is controlled by the diagonal width or diameter, and design is typically varied to take advantage of this behavior. Reduction of taper in the direction of flow leads to a wicking effect for diameters below 200 microns. Conversely, flow can be stopped by opening up a channel to form a bulb unless pressure is applied. Vias in a channel can be designed to promote directional flow, a sort of solid state check valve.

As used herein, the term "downstream" means that, in use, a sample passes sequentially through the different parts of the device. While the term "downstream" includes within its scope two parts of the device being in direct fluid communication, it also includes within its scope when the two parts are separated by, for example, a valve or another part of the device. The term "integrated" means that two different parts of the device are combined into a single unit, so that, for example, the same part of the device can serve to filter the sample and act as a lysis unit. When the term "integrated" is applied to the device of the first and second aspects of the present invention combined with a nucleic acid amplification unit, it means that the two parts of the system are connected to one another so that, in use, they are in fluid communication with one another. In another aspect, the term "integrated" means that the different parts of the device are preferably formed on a common substrate. The term "connected" when applied to two parts of the device means that the two parts may be in direct fluid communication with one another (e.g. through either being joined directly together or joined through a channel) or may be separated from one another by, for example, a valve or another part of a device. Preferably, the term "connected to" means that two parts of the device are directly joined to one another.

Microfluidic pumps: include for example, bulbs, bellows, diaphragms, or bubbles intended to force movement of fluids, where the substructures of the pump have a thicknesses or other dimension of less than 1 millimeter. Such pumps include the mechanically actuated recirculating pumps described in U.S. Pat. No. 6,743,399 to Weigl and U.S. 2005/0106066 to Saltsman, commonly assigned to the applicant. Such pumps may be robotically operated or operated by hand. Electroosmotic pumps are also provided. Such pumps can be used in place of external drives to propel the flow of solubilized reagents and sample in microfluidic device-based assays.

Bellows ("Finger") Pump: is a device formed as a cavity, often cylindrical in shape, bisected in coronal section by an elastomeric diaphragm to form a first and a second half-chamber which are not fluidically connected. The diaphragm is controlled by a pneumatic pulse generator connected to the first half-chamber. Positive pressure above the diaphragm distends it, displacing the contents of the second half-chamber, negative gauge pressure (suction) retracts it, expanding the second half chamber and drawing fluid in. By half-chamber, it should be understood that the effective area of the diaphragm is the lesser of the volume displacement under positive pressure and the volume displacement under suction pressure, and it thus optimal when the first and second half chambers are roughly symmetrical or equal in volume above and below the diaphragm. The second half-chamber is connected to a fluid in-port and out-port. The fluid in-port and out-port may be separate ports or a single port, but in either case, are under valve control. As described above, a pneumatic pulse generator is pneumatically connected to the first half-chamber, generally by a microchannel, which is also valved. In the complete apparatus, pneumatic actuation is programmable. Thus, programmable pneumatic pressure logic used by the pulse generator has two functions, to actuate the diaphragm on signal, and to open and close valves on signal. When the pulse generator is off-cartridge, nipples or inlets, a pneumatic manifold and solenoid valves are provided.

In use, fluid enters the second half-chamber of a bellows pump through the inlet valve when negative pressure is applied to the diaphragm (or passively, when fluid is pushed in by a second bellows pump). Then, when positive pressure is applied to the diaphragm, the fluid contents of the chamber are displaced out through the outlet valve. Similarly, positive and negative pressure signals control valve opening and closing. By supplying a train of positive and negative pressure pulses to a diaphragm, fluid can be moved in and out of a bellows pump chamber. This fluid motion becomes directional by the application of synchronized valve logic, thus the pumping action.

Microfluidic valves: include a genus of hydraulic, mechanic, pneumatic, magnetic, and electrostatic actuator flow controllers with at least one dimension smaller than 500 µm. A representative flap valve of the genus is described in U.S. Pat. No. 6,431,212. Also included are check valves. One class of valves refers to a configuration in which a flow channel and a control channel intersect and are separated by an elastomeric membrane that can be deflected into or retracted from the flow channel in response to an actuation force in the control channel. Patents describing species of microfluidic valves include U.S. Pat. Nos. 5,971,355, 6,418,968, 6,518,99, 6,620,273, 6,748,975, 6,767,194, 6,901,949, and U.S. Patent Application 2002/0195152 and 2005/02005816, several of which are commonly assigned to the applicant.

Check valve: is a one-way valve. Microscale versions of ball-spring, flap, and flip-flop valves are check valves.

Passive shut-off valves: are wettable inserts or coatings in microfluidic channels that swell when immersed, closing the microchannel off to further flow in either direction. Analogously, "surface tension valves" consisting of a ring of hydrophobic material on the walls of a microchannel have been disclosed to delay or stop the flow of a reagent. Stop flow can also be achieved by widening the taper of a microfluidic channel diameter.

Self-priming: connotes a microfluidic channel that is fabricated from a material or is treated so that the channel is wettable and capillary flow begins generally without the need to prime the channel.

Via: A step in a microfluidic channel that provides a fluid pathway from one substrate layer to another substrate layer above or below, characteristic of laminated devices built from layers.

Reagent pack or reservoir: an on-board reagent pack used to deliver reagents by pressurizing the diaphragm and may appose a "sharp", such as a metal chevron, so that pressure on the diaphragm ruptures the "pillow" (see pillow). These may be used with check valves or closable vents to produce directional fluid flow and reagent delivery. Suitable materials for the deformable film include parafilm, latex, foil, and polyethylene terephthalate. Key factors in selecting a deformable film include the yield point and the deformation relaxation coefficient (elastic modulus).

Waste chamber or "pack": is a cavity or chamber that serves as a receptacle for sequestering discharged sample, rinse solution, and waste reagents. Typically also includes a wicking material (see wick) or absorbent batt. Waste packs may also be sealed under an elastic isolation membrane sealingly attached to the body of the microfluidic device. This inner membrane expands as the bibulous material expands, thus enclosing the waste material. The cavity outside the isolation membrane is vented to atmosphere so that the waste material is contained and isolated. Waste packs may optionally contain dried or liquid sterilants.

Wick: is a bibulous material used to propel fluid flow by capillary wetting in place of, or in concert with, microfluidic pumps. The bibulous core typically includes a fibrous web of natural or synthetic fibers, or absorbent batt, and also often includes certain absorbent gelling materials usually referred to as "hydrogels," "superabsorbent" or "hydrocolloid" materials. Materials include papers, sponges, diaper materials, Contec-Wipe, and others. Dessicants may also be used, such as calcium sulfate, calcium sulfate, silica gel, alone or in combination with bibulous materials.

Trap: a fluid trap with dam that further isolates a waste reservoir from a vent.

Vent: a pore intercommunicating between an internal cavity and the atmosphere. A "sanitary" or "isolation vent" also contains a filter element that is permeable to gas, but is hydrophobic and resists wetting. Optionally these filter elements have pore diameters of 0.45 microns or less. These filters function both in forward and reverse isolation. Filter elements of this type and construction may also be placed internally, for example to isolate a valve or bellows pump from the pneumatic manifold controlling it.

"Conventional" is a term designating that which is known in the prior art to which this invention relates.

"About" and "generally" are broadening expressions of inexactitude, describing a condition of being "more or less", "approximately", or "almost" in the sense of "just about", where variation would be insignificant, obvious, or of equivalent utility or function, and further indicating the existence of obvious minor exceptions to a norm, rule or limit. For example, in various arrangements the foregoing terms refer to a quantity within 20%, 10%, 5%, 1% or 0.1% of the value which follows the term.

Herein, where a "means for a function" is described, it should be understood that the scope of the invention is not limited to the mode or modes illustrated in the drawings alone, but also encompasses all means for performing the function that are described in this specification, and all other means commonly known in the art at the time of filing. A "prior art means" encompasses all means for performing the function as are known to one skilled in the art at the time of filing, including the cumulative knowledge in the art cited herein by reference to a few examples.

A means for polymerizing, for example, may refer to various species of molecular machinery described as polymerases and their cofactors and substrates, for example reverse transcriptases and TAQ polymerase, and includes the cumulative knowledge of enzymology cited herein by reference to a few examples.

Means for Amplifying include thermocycling and isothermal means. The first thermocycling technique was the polymerase chain reaction (referred to as PCR) which is described in detail in U.S. Pat. Nos. 4,683,195, 4,683,202 and 4,800,159, Ausubel et al. Current Protocols in Molecular Biology, John Wiley and Sons, Baltimore, Md. (1989), and in Innis et al., ("PCR Protocols", Academic Press, Inc., San Diego Calif., 1990). Polymerase chain reaction methodologies are well known in the art. Briefly, in PCR, two primer sequences are prepared that are complementary to regions on opposite complementary strands of a target sequence. An excess of deoxynucleoside triphosphates are added to a reaction mixture along with a DNA polymerase, e.g., Taq polymerase. If the target sequence is present in a sample, the primers will bind to the target and the polymerase will cause the primers to be extended along the marker sequence by adding on nucleotides. By raising and lowering the temperature of the reaction mixture, the extended primers will dissociate from the template to form reaction products, excess primers will bind to the template and to the reaction products and the process is repeated. By adding fluorescent intercalating agents, PCR products can be detected in real time or at the end of the thermocycling process.

One isothermal technique is LAMP (loop-mediated isothermal amplification of DNA) and is described in Notomi, T. et al. Nucl Acid Res 2000 28.

Strand Displacement Amplification (SDA) is another method of carrying out isothermal amplification of nucleic acids which involves multiple rounds of strand displacement and synthesis, i.e., nick translation (Walker et al. Nucleic Acids Research, 1992: 1691-1696). A similar method, called Repair Chain Reaction (RCR), involves annealing several probes throughout a region targeted for amplification, followed by a repair reaction in which only two of the four bases are present. The other two bases can be added as biotinylated derivatives for easy detection. A similar approach is used in SDA. Target specific sequences can also be detected using a cyclic probe reaction (CPR). In CPR, a probe having 3' and 5' sequences of non-specific DNA and a middle sequence of specific RNA is hybridized to DNA that is present in a sample. Upon hybridization, the reaction is treated with RNase H, and the products of the probe identified as distinctive products that are released after digestion. The original template is annealed to another cycling probe and the reaction is repeated.

Another nucleic acid amplification technique is reverse transcription polymerase chain reaction (RT-PCR). First, complementary DNA (cDNA) is made from an RNA template, using a reverse transcriptase enzyme, and then PCR is performed on the resultant cDNA.

Another method for amplification is the ligase chain reaction ("LCR"), disclosed in EPO No. 320 308. In LCR, two complementary probe pairs are prepared, and in the presence of the target sequence, each pair will bind to opposite complementary strands of the target such that they abut. In the presence of a ligase, the two probe pairs will link to form a single unit. By temperature cycling, as in PCR, bound ligated units dissociate from the target and then serve as "target sequences" for ligation of excess probe pairs. U.S. Pat. No. 4,883,750, the disclosure describes a method similar to LCR for binding probe pairs to a target sequence.

QβReplicase, may also be used as still another amplification method in the present invention. In this method, a replicative sequence of RNA that has a region complementary to that of a target is added to a sample in the presence of an RNA polymerase. The polymerase will copy the replicative sequence that can then be detected.

Still further amplification methods, described in GB Application No. 2 202 328, and in PCT Application No. PCT/US89/01025, the disclosures may be used in accordance with the present invention. In the former application, "modified" primers are used in a PCR-like, template- and enzyme-dependent synthesis. The primers may be modified by labeling with a capture moiety (e.g., biotin) and/or a detector moiety (e.g., enzyme). In the latter application, an excess of labeled probes are added to a sample. In the presence of the target sequence, the probe binds and is cleaved catalytically. After cleavage, the target sequence is released intact to be bound by excess probe. Cleavage of the labeled probe signals the presence of the target sequence.

Other nucleic acid amplification procedures include transcription-based amplification systems (TAS), including nucleic acid sequence based amplification (NASBA) and 3SR (Kwoh et al., 1989, Proc. Natl. Acad. Sci. U.S.A., 86: 1173; Gingeras et al., PCT Application WO 88/10315). In NASBA, the nucleic acids can be prepared for amplification by standard phenol/chloroform extraction, heat denaturation of a clinical sample, treatment with lysis buffer and minispin columns for isolation of DNA and RNA or guanidinium chloride extraction of RNA. These amplification techniques involve annealing a primer which has target specific sequences. Following polymerization, DNA/RNA hybrids are digested with RNase H while double stranded DNA molecules are heat denatured again. In either case the single stranded DNA is made fully double stranded by addition of second target specific primer, followed by polymerization. The double-stranded DNA molecules are then multiply transcribed by an RNA polymerase such as T7 or SP6. In an isothermal cyclic reaction, the RNAs are reverse transcribed into single stranded DNA, which is then converted to double stranded DNA, and then transcribed once again with an RNA polymerase such as T7 or SP6. The resulting products, whether truncated or complete, indicate target specific sequences.

Davey et al., EPO No. 329 822, disclose a nucleic acid amplification process involving cyclically synthesizing single-stranded RNA ("ssRNA"), ssDNA, and double-stranded DNA (dsDNA), which may be used in accordance with the present invention. The ssRNA is a template for a first primer oligonucleotide, which is elongated by reverse transcriptase (RNA-dependent DNA polymerase). The RNA is then removed from the resulting DNA:RNA duplex by the action of ribonuclease H(RNase H, an RNase specific for RNA in duplex with either DNA or RNA). The resultant ssDNA is a template for a second primer, which also includes the sequences of an RNA polymerase promoter (exemplified by T7 RNA polymerase) 5' to its homology to the template. This primer is then extended by DNA polymerase (exemplified by the large "Klenow" fragment of E. coli DNA polymerase I, resulting in a double-stranded DNA ("dsDNA") molecule, having a sequence identical to that of the original RNA between the primers and having additionally, at one end, a promoter sequence. This promoter sequence can be used by the appropriate RNA polymerase to make many RNA copies of the DNA. These copies can then re-enter the cycle leading to very swift amplification. With proper choice of enzymes, this amplification can be done isothermally without addition of enzymes at each cycle. Because of the cyclical nature of this process, the starting sequence can be chosen to be in the form of either DNA or RNA.

Miller et al. in PCT Application WO 89/06700, disclose a nucleic acid sequence amplification scheme based on the hybridization of a promoter/primer sequence to a target single-stranded DNA ("ssDNA") followed by transcription of many RNA copies of the sequence. This scheme is not cyclic, i.e., new templates are not produced from the resultant RNA transcripts. Other amplification methods include "RACE" and "one-sided PCR" (Frohman, M. A., In: "PCR Protocols: A Guide to Methods and Applications", Academic Press, N.Y., 1990; Ohara et al., 1989, Proc. Natl. Acad. Sci. U.S.A., 86: 5673-567.

Methods based on ligation of two (or more) oligonucleotides in the presence of nucleic acid having the sequence of the resulting "di-oligonucleotide", thereby amplifying the di-oligonucleotide, may also be used in the amplification step of the present invention. Wu et al., (1989, Genomics 4: 560).

"Means for detection": as used herein, refers to an apparatus for displaying an endpoint, i.e., the result of an assay, and may include an instrument photodiode, nephlometer, photon counter, voltmeter, ammeter, pH meter, capacitive sensor, radio-frequency transmitter, magnetoresistometer, or Hall-effect device. Magnifying lenses in the cover plate, optical filters, colored fluids and labeled probes may be used to improve detection and interpretation of assay results. "Labels" or "tags" include, but not limited to, dyes such as chromophores and fluorophores; and chemoluminescence as is known in the prior art. QDots, such as CdSe coated with ZnS, decorated on magnetic beads, or amalgamations of QDots and paramagnetic Fe3O4 microparicles, are a convenient method of improving the sensitivity of an assay of the present invention. Fluorescence quenching detection endpoints are also anticipated. A variety of substrate and product chromophores associated with enzyme-linked immunoassays are also well known in the art and provide a means for amplifying a detection signal to improve the sensitivity of the assay, for example "up-converting" fluorophores. Fluorescence and optical detectors may include photodiodes, photovoltaic devices, phototransistors, avalanche photodiodes, photoresistors, CMOS, CCD, CIDs (charge injection devices), photomultipliers, and reverse biased LEDs. Detection systems are optionally qualitative, quantitative or semi-quantitative.

"Melt analysis" or "melting curve analysis" or "high resolution melt curve analysis (HRM)" or "FRET melt analysis" is an assessment of the dissociation-characteristics of double-stranded DNA during heating. As the temperature is raised, the double strand begins to dissociate. The temperature at which 50% of DNA is denatured is known as the melting point. The temperature-dependent dissociation between two DNA-strands can be measured using a DNA-intercalating fluorophore such as SYBR green, EvaGreen or fluorophore-labeled DNA probes. In the case of SYBR green (which fluoresces 1000-fold more intensely while intercalated in the minor groove of two strands of DNA), the dissociation of the DNA during heating is measurable by the large reduction in fluorescence that results. Alternatively, juxtapositioned probes (one featuring a fluorophore and the other, a suitable quencher) can be used to determine the complementarity of the probe to the target sequence. The probe-based technique may be used post-PCR to detect single-nucleotide polymorphisms (SNP), novel mutations, and methylation patterns and can also distinguish between homozygous wildtype, heterozygous and homozygous mutant alleles by virtue of the dissociation patterns produced.

"Molecular beacon" - is a single stranded hairpin-shaped oligonucleotide probe designed to report the presence of specific nucleic acids in a solution. A molecular beacon consists of four components; a stem, hairpin loop, end- labeled fluorophore and opposite end-labeled quencher. When the hairpin-like beacon is not bound to a target, the fluorophore and quencher lie close together and fluorescence is suppressed. In the presence of a complementary target nucleotide sequence, the stem of the beacon opens to hybridize to the target. This separates the fluorophore and quencher, allowing the fluorophore to fluoresce. Alternatively, molecular beacons also include fluorophores that emit in the proximity of an end-labeled donor. 'Wavelength- shifting Molecular Beacons' incorporate an additional harvester fluorophore enabling the fluorophore to emit more strongly. Current reviews of molecular beacons include Wang K et al, 2009, Molecular engineering of DNA:molecular beacons. Angew Chem Int Ed Engl, 48(5):856-870; Cissell KA et al, 2009, Resonance energy transfer methods of RNA detection, Anal Bioanal Chem 393(1):125-35 and Li Y, et al, 2008, Molecular Beacons: an optimal multifunctional biological probe, Biochem Biophys Res Comm 373(4):457-61. Recent advances include Cady NC, 2009, Quantum dot molecular beacons for DNA detection. Methods Mol Biol 554:367-79.

Fluorescence nucleic acid assays include amplification with tagged primers and probe-based detection chemistries. Fluorescent products can be assayed at the end of the assay, or by measuring the amount of amplified product in real time.

While not limiting, TaqMan Probe (Applied Biosystems) which relies on displacement and polymerase-mediated hydrolysis of a 5' reporter dye with 3' quencher construct, FRET hybridization probes, dual oligo FRET-based probes (Roche), minor groove binder-conjugated hybridization probes (MGB probes, Applied Biosystems), Eclipse probes, Locked NA Probes (Exiqon/Roche), Amplifluor primer chemistries, Scorpions primer chemistries, LUX primers, Qzyme primers, RT-PCR, among others, are all suitable in the present invention. Intercalation dyes may also be used. Reverse transcriptast is used to analyze RNA targets and requires a separate step to form cDNA. Recent advances include Krasnoperov LN et al. 2010. Luminescent probes for ultrasensitive detection of nucleic acids. Bioconjug Chem 2010 Jan 19 epub. In addition to chemical dyes, probes include green fluorescent proteins, quantum dots, and nanodots, all of which are fluorescent. Molecules such as nucleic acids and antibodies, and other molecules having affinity for an assay target, may be tagged with a fluorophore to form a probe useful in fluorescent assays of the invention.

In some arrangements, "Probes" refer to oligonucleotide-minor groove binding molecule (MGB) conjugates (e.g. "MGB- Eclipse" probes). The MGB moeity is a synthetic molecule that binds to the minor groove of double stranded DNA molecules. The probes are constructed such that the MGB and a quencher moiety are at the 5'-end of the oligonucleotide while a fluorophore is at the 3'-end. The 5'-positioning of the MGB protects the MGB-Eclipse probe from being cleaved during PCR and makes the probe available for post-PCR melting curve analysis. A fluorescence increase is generated by a transition of the probe from a randomly coiled to linearized state upon hybridization to target DNA. In Real-Time PCR applications, MGB increases the stability of double stranded DNA complexes, specifically, the hybridization between the probe and the amplified DNA target. The increased DNA-DNA hybrid stability allows the design of shorter detection probes with higher specificity. The specificity of the probes increases the ability to discriminate between a perfectly matched sequence and a mismatched target compared to analogous MGB-free, longer counterpart probes.

"FRET" (Fluorescence Resonance Energy Transfer) - is a fluorescence technique that enables investigation of molecular interactions. It depends on the transfer of energy from one fluorophore to another fluorophore (i.e., a donor and a quencher) when the two molecules are in close proximity such a when hybridized. Recent advances include Carmona AK et al [2009, The use of fluorescence resonance energy transfer (FRET) peptides for measurement of clinically important proteolytic enzymes, An Acad Bras Cienc 81(3):381-92].

Means for heating and cooling: A number of means for thermocycling a liquid filled chamber have been described in the prior art. These prior art means include convective and conductive heating elements such as electroresistors, hot air, lasers, infrared radiation, Joule heating, TEC or Peltier devices, heat pumps, endothermic reactants, and the like, generally in conjunction with a heat sink for dissipating heat during chill-down parts of the cycle. Heating means may also include heating by the motion of magnetic beads driven by a high frequency magnetic field.

Heating and cooling devices for thermocycling fall into two categories: ramped and fixed temperature. Fixed temperature devices maintain a relatively constant temperature in a reaction, and at least two reaction chambers are needed for thermocycling. Ramped heating devices will vary the temperature between at least two set points, and therefore only one reaction chamber is required for thermocycling. Combinations of heating elements are possible. Peltier devices may be used for both fixed temperature and ramped applications. Water baths are not well adapted to ramped temperature control for thermocycling.

Generally, heating and cooling means interface with a fluidics member so as to effect heat exchange with the liquid contents. For PCR, the relevant elements forming the microfluidic channels or chambers where heat exchange takes place are termed as part of the "PCR fluidics and thermal interface" assembly.

"High thermal conducting polymer" (as disclosed in U.S. Patent No.) is a polymeric composition having high thermal conductivity and dielectric strength. The polymer composition includes a base polymer matrix and a thermally-conductive, electrically-insulating material. A reinforcing material such as glass can be added to the composition. The polymer composition includes 20% to 80% by weight of a polymer matrix, 20% to 80% by weight of a thermally-conductive, electrically-insulating ceramic material. The polymer composition may further include 3% to 50% by weight of a reinforcing material. The polymer matrix can be a thermoplastic or thermosetting polymer. The thermally-conductive, electrically-insulating ceramic material can be alumina, calcium oxide, titanium oxide, silicon oxide, zinc oxide, silicon nitride, aluminum nitride, boron nitride, or mixtures thereof. The reinforcing material can be glass, inorganic minerals, or other suitable material.

Unless the context requires otherwise, throughout the specification and claims which follow, the word "comprise" and variations thereof, such as, "comprises" and "comprising" are to be construed in an open, inclusive sense, that is as "including, but not limited to".

Reference throughout this specification to "one arrangement" or "an arrangement" means that a particular feature, structure or characteristic described in connection with the arrangement is included in at least one arrangement of the present invention. Thus, the appearances of the phrases "in one arrangement" or "in an arrangement" in various places throughout this specification are not necessarily all referring to the same arrangement. Furthermore, the particular features, structures, or characteristics may be combined in any suitable manner in one or more arrangements.

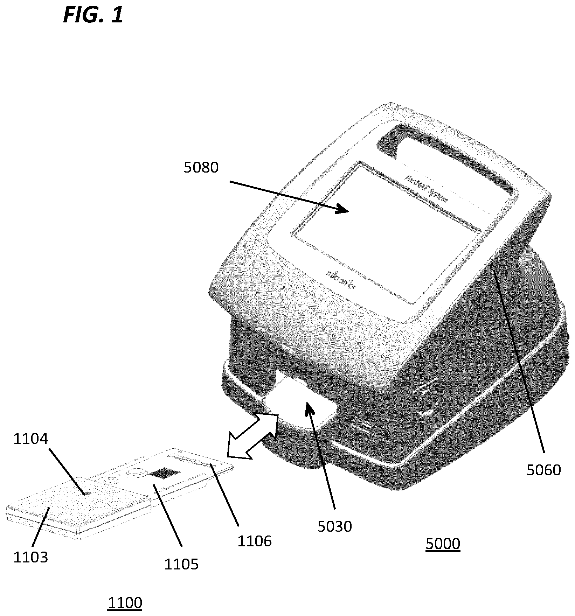

Turning now to the figures, FIG. 1 is a perspective view of host instrument 5000, animating the insertion of anterior nose 1105 of microfluidic cartridge1100 with optical windows 1106 into docking bay 5030. Cartridge sample port 1104 and coverplate 1103 remain external the host instrument during operation. Shown are touch screen display surface 5080 and compact chassis or housing 5060. Because all reagents and assay controls are provided in the microfluidic cartridge, the instrument has full standalone operability. The docking bay is suspension-mounted and may be tilted at an angle relative to the instrument base, as will be discussed in more detail below.

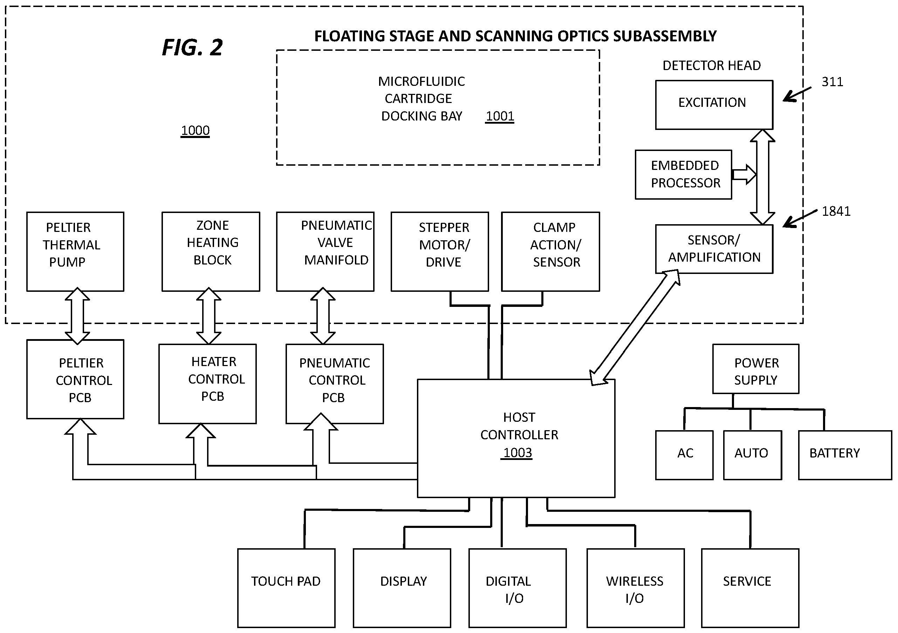

FIG. 2 is a block diagram providing an overview of the functional units of the host instrument assay apparatus. Mechanical, pneumohydraulic, temperature control, optical, and input/output (I/O) systems are coordinated by two digital processors, the first is termed the "host controller", which receives user commands and outputs assay results, and also directs the mechanical, thermal, and pneumohydraulic process steps of an assay, and the second is termed the "embedded microprocessor", which exerts localized control over optical systems, including signal acquisition and processing within the detector head and communicates digital data to the host controller. The optical systems controlled by the embedded processor are shielded within the detector head from the noisy analog circuits within the apparatus housing, permitting high gain amplification in a relatively noiseless environment. Each processor is provided with a separate clock, volatile and non-volatile memory, and performs autonomously of the other.

As an overview, a floating stage (1000, dotted line) within the instrument supports a docking bay (here 1001) for receiving and reversibly clamping a microfluidic cartridge and is provided with a scanning detector head 311. The detector head is scanned across optical windows of the microfluidic cartridge under control of the host controller. The detector head contains subassemblies for providing excitation light and sensors for detecting, amplifying and processing fluorescent emission signals. The floating stage rides on a spring suspension mounted to a stationary baseplate and instrument stand.

Affixed to the stationary baseplate and positioned for interfacing with the floating stage are a heater module with separately controllable heating block and Peltier thermal pump under control of the host controller 1003, a pneumatics interface connected to pneumatic servos mounted on the base plate 330, which also serves as a pneumatic distribution manifold, a wire harness connecting the stepper motor and the host controller, and wiring harnesses for the clamp motor and related sensors, including pressure switches for measuring the position of the clamp and the microfluidic cartridge, a barcode reader, and temperature monitors. Power is distributed to all systems from a battery mounted in the instrument stand, or by direct connection to an AC converter or to a DC source such as an automobile.

The host controller 1003 is mounted on a motherboard which also contains a touch pad panel for operation of the instrument and an LCD display panel. The instrument may transmit data to an outside network or device via a variety of digital serial I/O links, including a wireless networking card or other remote communication device. A special digital junction is provided for service access to the RAM registers and programming, which is software encoded in solid state ROM.

General instructions for operation of the instrument, such as the sequence of pneumatic pulses and valve logic required to operate a particular microassay card having the capability to diagnose a particular disease or pathology from a liquid sample, are provided by programmable software associated with the host controller, which is supplied with volatile and non-volatile memory for executing assays. If for example, the barcode reader detects a particular microassay cartridge, the device is programmed to perform a particular assay recognized from with that barcode and to interpret and display the results in a designated format.

However, the operation of the signal acquisition optics, including modulation of source intensity, signal amplification and filtering, is under control of a daemon resident in the embedded microprocessor 1841 on the sensor PCB within the detector head 311. Thus electrical signals that are highly sensitive to noise are shielded in the detector head from the more noisy environment of the host instrument, and transmission of analog signals from detector head to host A/D converters is completely avoided. This unconventional separation of functions has happily proved highly advantageous in reducing noise susceptibility of the instrument, as is needed for full portability and field operation, and unexpectedly permits use of a high gain tri-stage amplifier in what would be expected to be a noisy electronic environment.

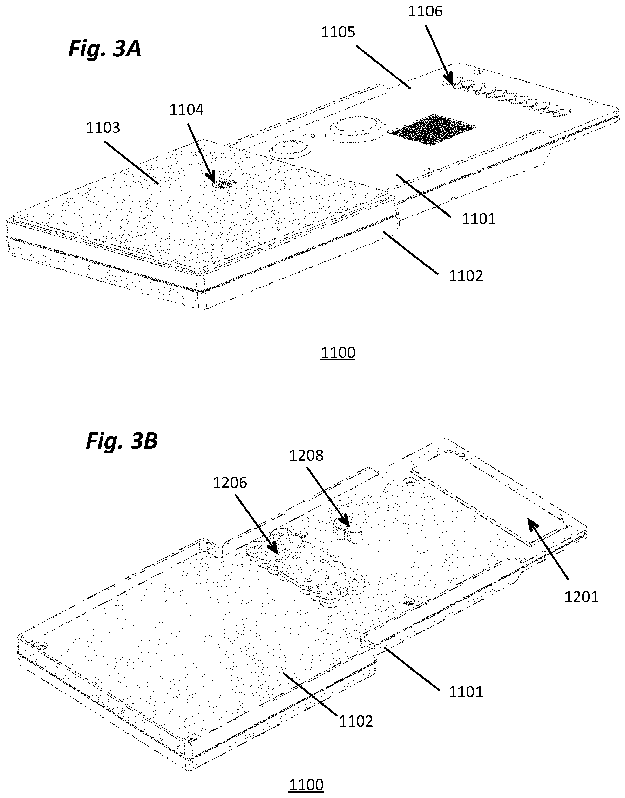

FIGS. 3A and 3B are perspective views of a disposable, single-use, sample-to-answer microfluidic cartridge for use with an apparatus, the cartridge containing all reagents for an assay and requiring only introduction of a test sample. The cartridge also contains all reagents necessary for performing process controls and positive and negative assay controls. The cartridge shown here consists of a first molded housing 1101 and a second molded housing 1102 with internal workings and coverplate 1103. Port 1104 is for receiving a test sample and anterior nose 1105 is for inserting into the docking bay of a host instrument. Shown from underneath is the second molded housing with assay well assembly 1201. Windows 1106 in the first molded housing are optical windows formed over sample wells in assay well assembly 1201. Gasket 1206 is for sealedly interfacing with a pneumatic interface multiport of a host instrument. Nucleic acid capture assembly 1208 is for nucleic acid extraction from a test sample.

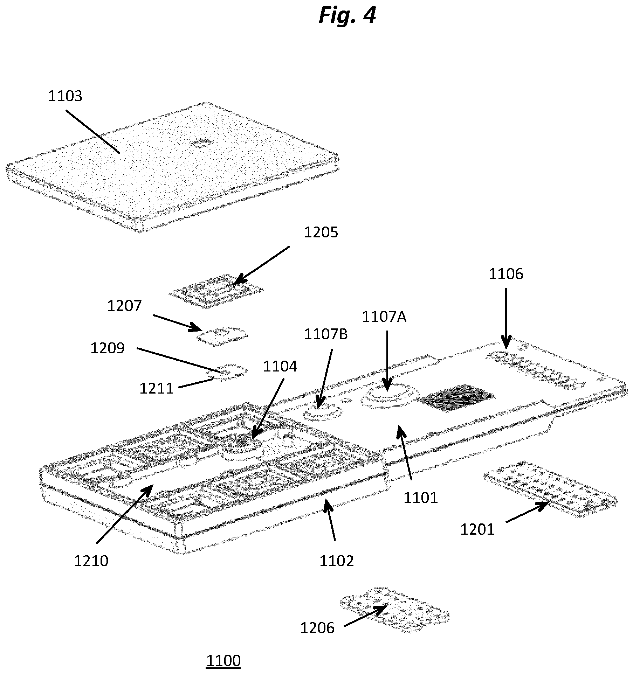

FIG. 4 is an exploded view showing the internal components of a microassay cartridge 1100. This particular cartridge is designed for PCR with FRET or molecular beacon detection. It is preferably left to the skill of the artisan to determine the details of the cartridge design and analytical reactions to be employed according to the diagnostic application and specific requirements to be met, and the following detailed description is supplied only for illustration.

Test sample is added through inlet port 1104. Optical windows 1106 on anterior nose of first molded housing 1101 insert into the host instrument and are aligned so that the wells of assay well assembly 1201 are scanned by an instrument detector head, which follows a linear path that transects the optical windows longwise. Added processing related to test sample preparation is supplied by bellows mixers 1107A and 1107B and nucleic acid capture assembly 1208. All liquid reagents required for sample preparation are enclosed in sealed rupturable foil pouches 1205 and are dispensed when needed under pneumatic control. In this arrangement, first molded housing is configured to provide six foil pouches, though is left to the skilled artisan to determine the number of pouches required, depending upon the requirements of the particular assay of interest. Sharps 1209 are fabricated of stainless steel with piercing edges 1211 that project at an angle below perpendicular relative to foil pouches. Premature rupture, or puncture, of foil pouches is prevented by springs 1207, which interface between foil pouches and sharps, protecting pouches from piercing edges of sharps. Springs are fabricated from polyvinyl chloride (PVC) and are deformable structures shaped to form a "tent" over the sharps. Upon pneumatic activation, the intrinsic force of the deformable springs is overcome, and springs "snap" down over sharps. Springs are formed with a hole in the top to enable pass through of the piercing edge of sharps, which rupture foil pouches. Advantageously, the angle of the steel piercing edges facilitates shearing of the foil material while preventing the sheared material interfaces from resealing. We have found that this mechanism provides for more reliable and efficient delivery of liquid reagents. Other reagents, e.g. for nucleic acid amplification and detection, are provided on-card in dry form. Fluid waste is sequestered in adsorbent batting glued into recessed area 1210 and sealed in place under the plastic coverplate 1103. The details of any particular molecular assay are beyond the present scope. In this arrangement, assay well assembly 1201 with internal microassay channels and wells provides for amplification of a nucleic acid target sequence by thermocycling and fluorescent detection of any resultant amplicon.

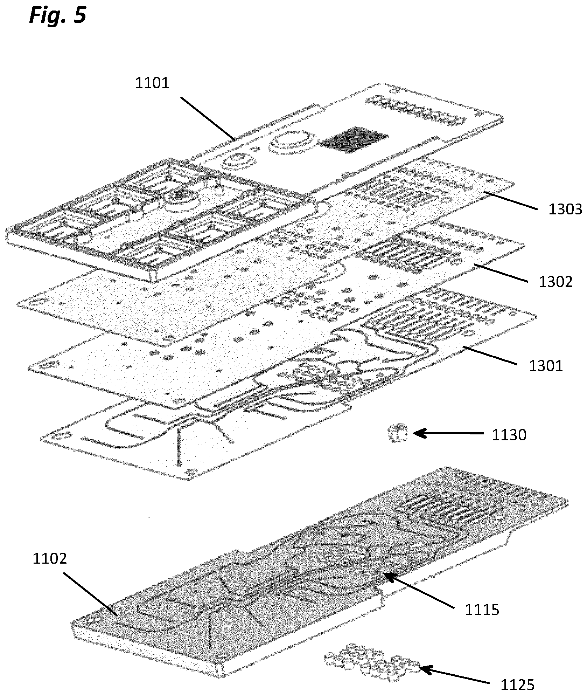

Figure 5 is an exploded view depicting the layer assembly of microfluidic cartridge 1100. Interfacing between first molded housing 1101 and second molded housing 1102 is a laminated stack of laminate layers 1301, 1302, and 1303, which provided, for example, valving and mixing functionalities and integrate the pneumatic and liquid circuits formed in first and second molded housings, as described further below. The pneumatic supply provided by the host instrument is directed through pneumatic ports 1115 in second molded housing. The pneumatic supply is fluidly connected to circuitry in first molded housing 1101, which may also be referred to as the "pneumatic layer". As used herein, the term "fluidily connected" means that the two features form a conduit for the passage and/or transport of any types of matter, e.g. a gas, a liquid, a solution, an aqueous suspension of solids, and the like. Liquid channels are formed by circuitry in second molded housing 1102, which may also be referred to as the "liquid layer", and laminate layer 1301 and are in fluid communication with reagent packs 1205, nucleic acid capture assembly 1130, and PCR assembly 1201. Planar segregation of pneumatic and liquid circuitry into upper and lower molded housings, respectively, prevents crossing of air and fluid lines, providing an advantageously robust cartridge architecture. A plurality of pneumohydraulic membranes or diaphragms are welded into laminate layer 1302 to form the mixers, valves, and staging chambers of the microfluidic cartridge, as described further below. Laminate layers 1301, 1302, and 1303 are further cut with holes and channels to connect the pneumatic and liquid circuits formed in first and second molded housings. Laminate layers 1303 and 1301 are fabricated with adhesive materials known in the art to fixedly bond first and second molded housings into an assembled microfluidic cartridge. Aerosol filter plugs 1125 are fitted into pneumatic ports 1115 in lower molded housing to create a physical barrier between the microfluidic cartridge and host instrument. Aerosol filter plugs 1125 may be fabricated from a liquid swellable, or super-swellable, material, such as porex®, and function to both prevent the transfer of fluids and absorb aerosolized materials, such as nucleic acids. Through trial and error, the inventors have found that fitting aerosol filter plugs into the pneumatic ports of the cartridge effectively isolates the host instrument from liquid and solid matter in the cartridge. This advantageously prevents contamination of the host instrument that could compromise subsequent diagnostic test results and raise considerable regulatory issues. Nucleic acid capture assembly 1130 is fitted into a recessed chamber in second molded body and is in fluid communication with liquid channels and thermal contact with the host instrument, as described in further detail below.

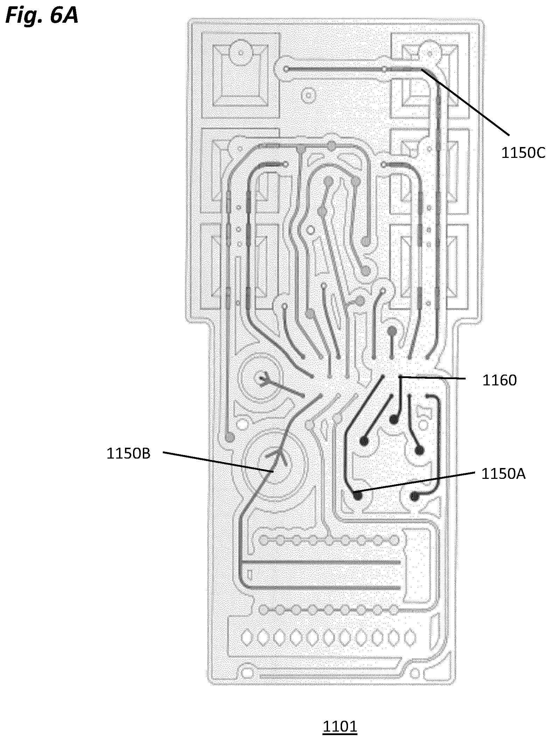

FIGS. 6A-C show further details of the pneumatic and liquid circuitry and welded pneumohydraulic membranes of first pneumatic layer 1101, laminate valve layer 1302, and second liquid layer1102 of microfluidic cartridge 1100. FIG. 6A is a plan view of the bottom surface of first molded housing (i.e. "pneumatic layer") 1101. First molded housings is fabricated by injection molding of a polymeric material, such as polyethylene terephthalate glycol (PETG). One function of the pneumatic layer is to seal the pneumatic side of valve layer 1302 in the cartridge assembly. A network of pneumatic lines in first molded housing control operation of the valves (exemplified here by line 1150A), mixers (exemplified here by line 1150B), and reagent pack dispension (as exemplified here by line 1150C). We have found that it is necessary to minimize the number of "feature sets" (e.g., valves, mixers, reagent packs) under control of a given pneumatic line. Multiplexing of feature sets to a single pneumatic line has been found to contribute to a higher level of cartridge failure. Through trial and error, we have found that twenty pneumatic lines connected to twenty ports 1160, associated individually with separate pressures for pumps, valves, and vents, are suitable for most assays. However, the invention is not intended to be limited to this configuration and other suitable pneumatic configurations are contemplated.

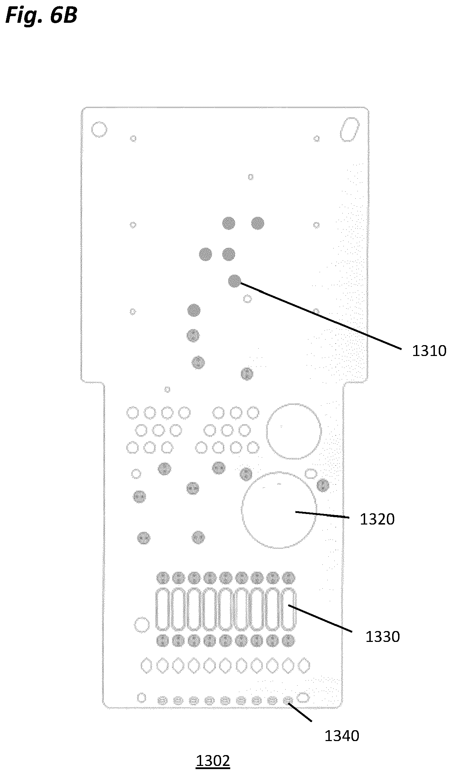

FIG. 6B is a plan view of laminate layer (i.e. "valve layer")1302, depicting an illustrative example of a configuration of pneumohydraulic diaphragm membranes, or films, that perform the valving, mixing, and fluid stop functions of the microfluidic cartridge. Diaphragm technologies for microvalves, micropumps and other pneumatic fluidic elements for use in microfluidic cartridges and their methods of manufacture and welding are described in applicant's copending patent applications no.s WO2014100743 and WO2011/094577. All membrane films may be welded into a single substrate material, e.g. a MELINEX® PET film to form layer 1302. In this exemplary configuration, valving membranes 1310 are fabricated from DURA-LAR® PET film; mixing membranes 1320 are fabricated from SARANEXTM film; and staging chamber 1330 and fluid stop 1340 membranes are fabricated from microporous films, such as PORELLE® film. This view shows the side of the laminate layer to which the membranes are welded and which contacts the surface of upper molded housing shown in FIG. 6A. The skilled artisan will appreciate that any number of alternative valving and mixing configurations and materials may be employed in laminate layer 1302.

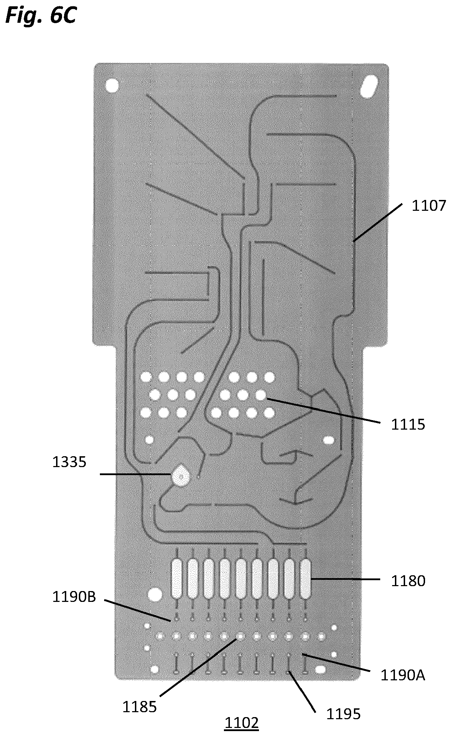

FIGS. 6C is a plan view of the upper surface of second molded housing 1102, i.e. the "liquid layer". One function of the second molded housing is to seal the liquid side of the valve layer in the cartridge assembly. Fluid lines 1107 in second molded housing transport fluids between functional features in the cartridge to perform an in-vitro diagnostic test, e.g. a molecular assay. Functional features may include reagent packs, valves, and mixing chambers, which are enclosed, or formed, within first molded housing and/or laminate layers and nucleic acid capture assembly 1130, staging chambers 1180, assay wells 1185, and fluid stops 1195. Vias 1190A and 1190B fluidly connect second molded housing with the assay well assembly. Windows 1185 are cut in lower molded housing to mate with the wells of the assay well assembly for detection of assay signals. Airports 1115 are in pneumatic connection with the instrument pneumatic manifold and pneumatic lines in the first molded housing, as described above. Second molded housings is fabricated by injection molding of a polymeric material, such as polycarbonate (PC) or polyethylene terephthalate glycol (PETG).

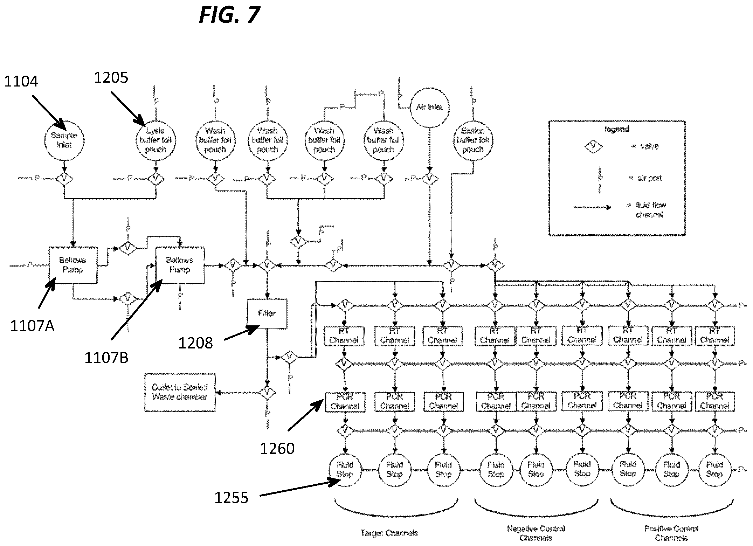

FIG. 7 is a schematic depiction of one arrangement of the invention, illustrating how various functional units of a microfluidic cartridge may be controlled by an exemplary valving and fluid logic. Shown are sample inlet 1104, foil packs 1205 filled with exemplary reagents, mixers (i.e. bellows pumps) 1107A and 1107B, nucleic acid capture membrane 1208, PCR wells 1260, and fluid stops 1255. Reverse transcription wells are optional, depending on the particular assay of interest.

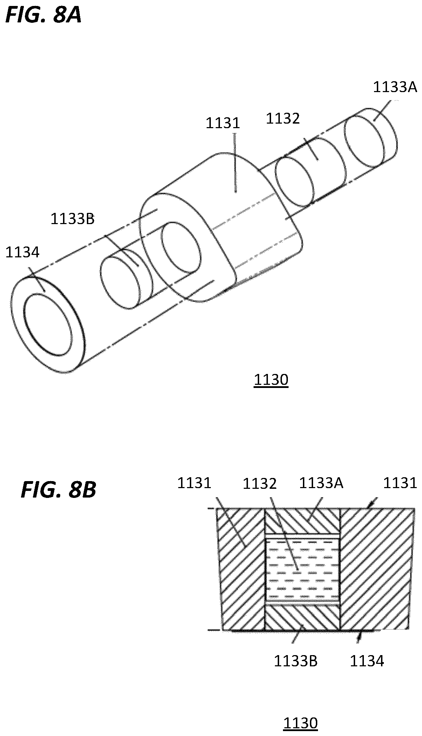

FIGS. 8A and 8B are exploded isometric and cross-sectional views, respectively, showing details of nucleic acid capture assembly 1130. The nucleic acid capture assembly includes housing 1131, capture matrix 1132, matrix support media, 1133, and adhesive gasket 1134. Housing 1131 is a generally hollow, asymmetrically shaped cylinder that holds the other components of the assembly in the hollow interior. The housing is molded from a polymeric material, such as PC or PETG, to an asymmetrical shape that keys into a complementarily shaped recess in the lower molded body. Proper orientation of the capture assembly in second molded housing ensures proper fluid communication of liquid channels. Capture matrix, or membrane, 1132 functions to bind and release target nucleic acids, which may be DNA and/or RNA. Suitable matrix or membrane materials are well known in the art and may include silica or glass fiber membranes. The nucleic acid capture membrane is further supported by two capture membrane support media discs, or frits, 1133A and 1133B. As shown in cross-sectional view FIG. 8B, the two media support frits are set are in a parallel configuration on the top and bottom surfaces of the capture membrane. This parallel configuration helps maintain a uniform distribution of matrix fibers in the capture membrane, which the inventors have found to be important to maintain a uniform flow of liquid through the membrane. This is a clear improvement over prior art filters or membranes, which are known to collapse under liquid contact due to a lack of structural support and thus fail to efficiently bind target nucleic acids. Capture membrane support media 1133A and 1133B may be fabricated of any suitable material, such as POREX®. Alternative support media arrangements are also contemplated by the present disclosure. In one arrangement, polypropylene washers may provide support for the capture membrane. Washers may further be configured to seal the edges of the housing channel and prevent liquid sample from flowing around the edges of the capture membrane. In another arrangement, the polymeric housing structure itself is molded to provide lateral membrane support features. Capture membrane adhesive gasket 1134 functions to adhere the capture assembly to lower molded housing and may be fabricated of any suitably adhesive material.

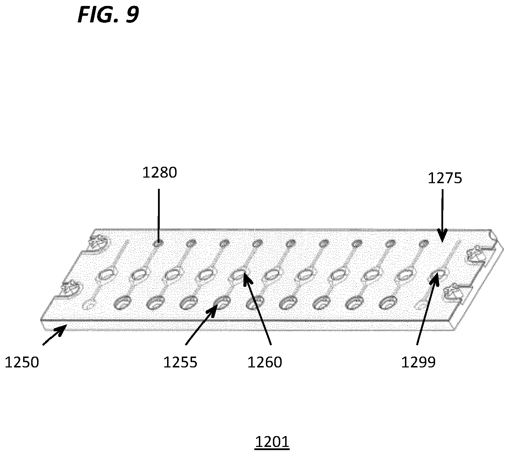

FIG. 9 shows a perspective view of assay well assembly 1201, which is suitable for several molecular reactions, including but not limited to reverse transcription, endpoint PCR, realtime PCR, and quantitative PCR, and melt curve analysis. In this arrangement, the assembly illustrated is configured for endpoint PCR by thermocycling and FRET detection in the same assay well. PCR well layer 1250 functions to amplify eluted nucleic acid target molecules and is fabricated from a high thermal conducting polymer, such as polypropylene, for optimal heat transfer and reduced cycle time for PCR. The thermal conductivity of suitable polymers preferably ranges from 1.0 W/mK to 10 W/mK. In one arrangement, the high thermal conducting polymer is COOLPOLY®D1201. Liquid sample enters well layer through vias 1280 that are in fluid communication with liquid channels in the second molded body. Each sample channel of layer 1250 is in fluid communication with two wells: a generally spherical well 1255 and a diamond-shaped well 1260. The diamond-shaped well 1260 is the amplification and detection well and contains all the reagents necessary for both nucleic acid amplification and detection of any resultant amplicon. We have found that the geometry of diamond-shaped well 1260 advantageously facilitates wetting and rehydration of dry reagents without the formation of bubbles. The angled sides of the diamond-shaped well are improvements over standard vertical, or rounded edges, that enhance collection and detection of emitted fluorescent light. Smaller, semi-spherical well 1255 functions as a fluid stop and is in fluid communication with air-permeable, liquid-impermeable membrane 1346 welded into laminate layer 1302. In this arrangement, PCR well assembly contains nine assay wells for the detection of up to three target analytes. For each target analyte, there are two control wells for corresponding positive and negative integrated controls, as described above. Wells for the amplification and detection of target analytes are in fluid communication with nucleic acid capture membrane and receive liquid sample containing eluted nucleic acids. In contrast, the integrated control wells are not in fluid communication with nucleic acid capture membrane and receive, instead, empty elution buffer as test sample. Empty wells 1299 are not in fluid communication with second molded body and may function as fluorescent standards during optical detection, though other uses are contemplated by the present invention. Overlaying PCR well layer 1250 is adhesive layer 1275 for fixedly adhering PCR well assembly to second molded housing. Assay well assembly also includes a capping layer between well layer 1250 and adhesive layer 1275. Capping layer is an optically transparent cover that permits detection of target signal while preventing leakage of liquid reagents out of PCR wells.

### Host Instrument Systems

Certain aspects of the mechanical, heating, clamping, optical, software and firmware, host controller, and decoupled optics functions of the host instrument of the present invention are disclosed throughout applicant's copending patent application no. WO2014/100725. The features described below represent certain alternative arrangements and improvements to the state of the art.

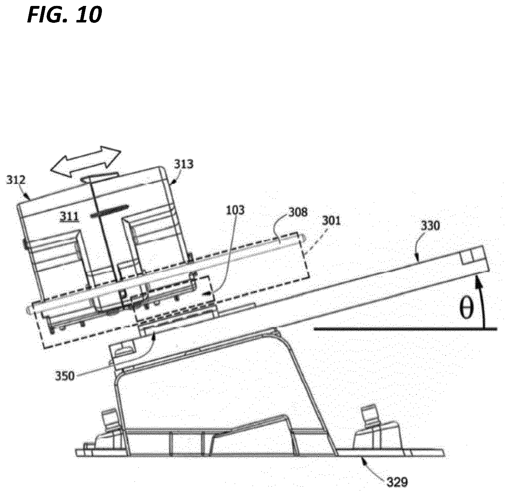

The floating stage with on-board optical bench and docking bay is a distinctive feature of the instrument. This feature is introduced conceptually in FIG. 10, which is a conceptual representation of the primary optothermomechanical subsystems of the instrument. A floating stage consists of a tray-like chassis 301 (dashed box) that is suspended on an inclined plane by a four-point spring-mounted suspension and supports a docking bay 103 for receiving a microfluidic cartridge. Also supported on the floating stage 300 is a detector head 311 mounted on paired guiderails. The cartridge is not part the instrument 100, but interfaces with the instrument after insertion into the floating docking bay 103.

During operation, the floating stage is clamped against a mounting plate (330) and engages contacting surfaces of zone heating block and Peltier thermal pump and associated resistive heating elements and circuits. A fan is provided to dissipate excess heat of the instrument during operation. The inclined mounting plate is also provided with a pneumatic interface port 350 for sealedly docking to the base of the microfluidic cartridge. Pneumatic pressure is delivered to the cartridge through the pneumatic interface port from an integral pneumatic distribution "manifold" or system embedded in the inclined mounting plate 330. The pneumatic manifold supplies negative and positive pressure from sources mounted on the inclined mounting plate. A motherboard-mounted, programmable host controller directs pneumatic driving pressure, vacuum, and control pulses to pumps and valves on the cartridge via the internal manifold in the base plate 330 and pneumatic interface port 350.

The detector head 311 is motorized and scanning of the cartridge is performed under the control of the host controller. To scan the detector head along paired guiderails the host controller engages a worm-gear driven by stepper motor. The detector head is fitted with an external window with objective lens which scans optical windows in the anterior nose of the microfluidic cartridge and collects raw optical signals. The detector head 311 has its own embedded microprocessor which functions independently of the host controller for optical signal acquisition. The host controller also regulates temperature in heating block and Peltier thermal pump and controls a set of solenoid valves and positive pressure and vacuum pump reservoirs linked to the pneumatic interface. The instrument is supplied with a display panel and touch panel for user interactions. Power input is flexible, and is optionally supplied by an AC adaptor, car adaptor, or from a rechargeable battery mounted under the instrument. Also included are optional wireless IO and digital IO ports.

FIG. 10 demonstrates conceptually that the floating stage 301, docking bay 103, detector head 311, and microfluidic cartridge may be mounted in the instrument chassis at a defined angle relative to the ground plane. Tilting the cartridge at an angle from the ground plane improves venting during fluid loading and minimizes air entrainment during wetting and mixing operations. Bubble accumulation, which interferes with heat transfer and optical interrogation of assay results, is avoided by this and other innovations disclosed here. The inclined mounting plate 330 establishes the angle of the floating stage 301, cartridge, and mechanical components of the clamping and optical scanning subassemblies. We found that bubble accumulation interfered with nucleic acid amplification, and was limited by the angular mount of the stage. This angle "theta" has been found to be advantageous in the range of 10 - 45 degrees from the ground plane, more preferably 10 ― 20 degrees, and is most preferentially about 15 degrees.

As shown in FIG. 10, the detector head 311 includes a clamshell housing with mating half shells (312,313). The detector head slides on lateral guide rails 308 and 309 and is under host control of a stepper motor with worm drive. The floating stage chassis 301 is springedly mounted in a four-point suspension and has no direct connection to the inclined mounting plate 330 until clamped. One of the two scanning guiderails 308 is readily visible in this view and is supported at either end by the floating stage chassis or tray 301. The docking bay is indicated by a dashed box (103) and marks the opening for insertion of the nose of the microfluidic cartridge under the detector head 311, which is enabled to scan from side to side as shown (double arrow). The pneumatic interface port 350 is shown here as a raised platform under the docking bay. Power conditioning, AC adaptors and battery storage functions are mounted beneath the inclined mounting plate 330 above the underside of the instrument stand 329, which is designed to rest on a flat surface.

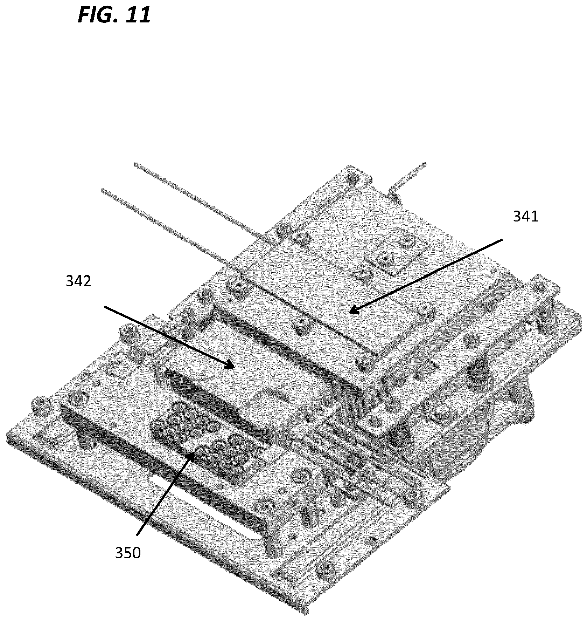

FIG. 11 is a CAD view of the bottom of the instrument illustrating interior of the details including the heater assembly with Peltier thermal pump 341 and heating block 342. The superior aspect of the heater assembly consists of one or more heating blocks and Peltier thermal pumps, each of which forms a thermal interface with a defined zone on the underside of the microfluidic cartridge for proper operation of the molecular biological procedures and/or reactions that occur in the enclosed channels and chambers of the cartridge during an assay. These procedures and/or reactions can be as simple as cell lysis and nucleic acid extraction or as complex as reverse transcription and nucleic acid amplification and generally require relatively stringent temperature control for optimal reactivity and specificity. The Peltier thermal pump and heating block may be spring-mounted and are urged upward in opposition to the downward pressure of the clamping mechanism to establish a high thermal diffusivity contact zone for heat transfer. Also shown are pneumatic interface ports 350, each independently ported to a source of positive or negative pressure from the pneumatic distribution manifold of the host instrument and independently under the control of a programmable host controller. This arrangement depicts 20 pneumatic ports, though other suitable configurations are contemplated by the present invention. These outlets interface and seal to mated inlets in the underside of the microfluidic card, and a timed pattern of intercommunicating pneumatic pressure, vacuum and pressure pulses are routed through the pneumatic interface to drive and control the assay in the cartridge.

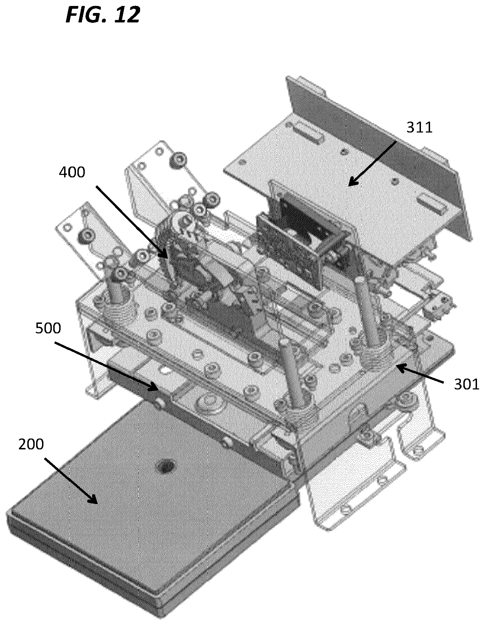

FIG. 12 is a CAD view depicting microfluidic cartridge 200 engaged with clamping mechanism 500 of the host instrument. Also shown are gear 400, springs 301, and detector head support 311. As described above, a silicon rubber gasket on the underside of the cartridge second molded housing mates with spring force to the pneumatic manifold of the host instrument and seals the pneumatic interconnections under compression when the cartridge is loaded in the instrument and spring pressure is applied. Gasket 1206 serves as a single-use sealing gasket and is advantageously supplied with the disposable cartridge, not as part of the instrument as per conventional wisdom. By including the gasket with the disposable cartridge, a better and cleaner seal at the pneumatic interface is obtained and the need to periodically replace the gasket is eliminated. In this configuration, the cartridge is fluidly engaged onto the pneumatic control interface multiport and is thermally contacted with the heat block 342 and Peltier thermal pump 341. The instrument pneumatic control manifold supplies regulated pneumatic pressure to the cartridge through the pneumatic interface multiport 350. In a complete instrument, mounting plate 330 is populated with pressure regulators, accumulators, and solenoids for controlling card pneumatics.

Pressure states are generally selected from a range of positive and negative pressures, including while not limiting to +150 kPa, +100 kPa, +70 kPa, 0 kPa, -35 kPa, and -50 kPa where higher pressures are used for rupturing reagent packs, for example, and negative pressure are used for opening valves, and so forth. These pressures may be supplied from buffered pressure reservoirs. Dial up variable pressure supplies may also be used. The pneumatic states are supplied to the cartridge through manifold subcircuits under microprocessor control. Each assay consists of a series of steps to be executed according to pneumatic valve and pump logic needed to move the fluid through the hydraulic circuitry. Vents are also a necessary part of the circuit and pressurizing, reversing pressure, and venting are all within the capacity of the instrument and associated microassay circuitry according to the requirements of each individual assay type.

### Optical Systems

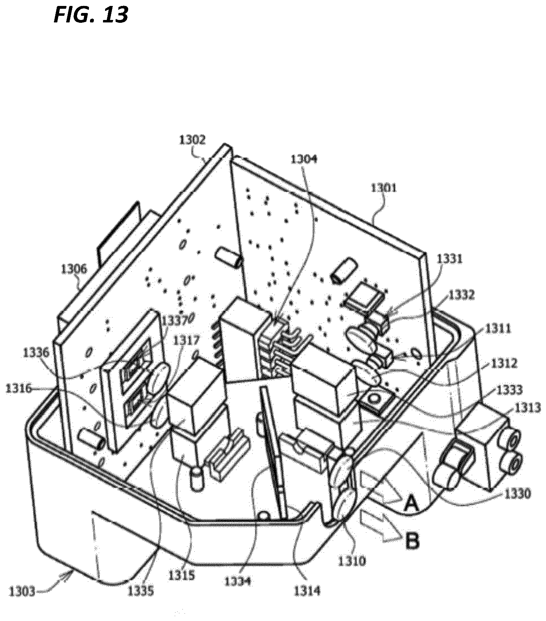

FIG. 13 is a perspective view of a dual channel detector head 1300 with two optical channels and electronically isolated circuit boards (1301,1302) for excitation and for emissions detection respectively. In this view, the upper half of the housing 1303 is removed in order to show the internal components of the detector head. The dual channels are marked by objective lenses (1310, 1330) and optic pathways A and B (open arrows marked A and B). The SMD LED excitation light sources (1311, 1331) are mounted on a source LED printed circuit board (1301), which is connected at right angles to sensor PCB (1302) via an edge-type resistive pin-connector (1304). The photodetection components are mounted on the sensor PCB (1302). A Faraday cage element (1306) is used to shield the photodiodes (1317) and (1337) and surrounding high gain amplification circuitry.

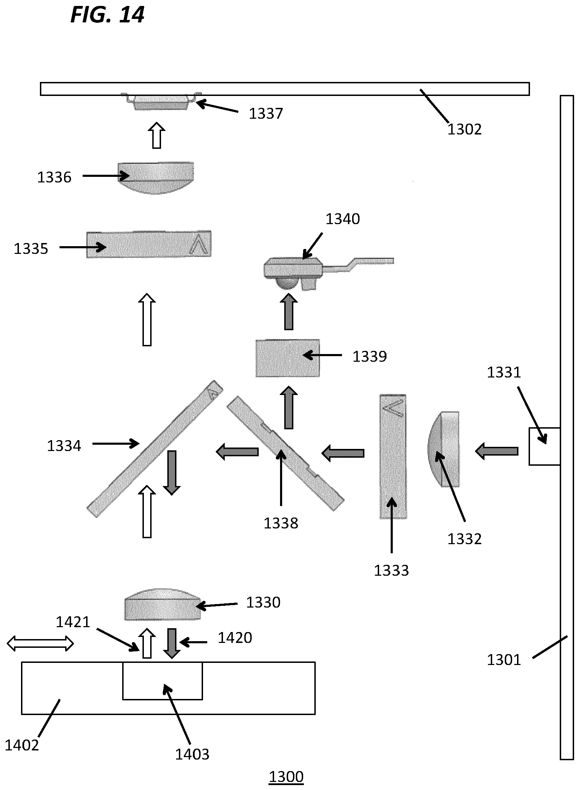

Fluorescent excitation is provided in the target channel (Arrow A) by a surface mounted LED (1331) which is chosen to match the excitation spectrum of the target fluorophore. Source LED (1331) emits a divergent light beam, and the radiated light beam is then collimated by source excitation lens (1332). Source lens (1332) is a planoconvex lens having its flat surface facing the LED. The collimated light beam may then be passed through an excitation bandpass filter (1333). The detector head has the ability to modify LED intensity during an assay, for example to maintain constant LED intensity over time as the heat of the system increases or decreases or when multiple excitation intensities are required during an assay. This is accomplished by a closed-loop, direct LED intensity modulation circuit in which around approximately 5% of the collimated, filtered excitation light is reflected from a light sampler mirror, through a neutral density filter, to a LED intensity detector. The remainder of the collimated, filtered excitation light beam is then reflected from a dichroic mirror element or beamsplitter (1334), which is installed at a forty-five degree angle to the incident beam, and is passed through a planoconvex objective lens (1330) and through an external window in the detector housing (Arrow A). After passing lens 1330, the excitation light is focused through a detection chamber (not shown, see FIGS. 14-17) embedded in a microassay cartridge, which contains a sample liquid with any target fluorophore. The path length of the excitation light through the sample liquid is doubled by use of a back mirror behind the microassay cartridge. The target fluorophore is excited by the incident light beam. The emission of the fluorophore is generally at a longer wavelength than the excitation wavelength and is shifted by an amount equal to the Stokes shift of the target fluorophore.

A portion of the returning emission from the target fluorophore in the detection chamber is collected by planoconvex sampling lens 1330 and is collimated before striking dichroic mirror 1334. Optionally, a Fresnel lens may be use to further reduce the working distance between the lens and the sample to optimize collection of emitted light, which is further enhanced by back mirror mounted on a heating block behind the detection chamber. Because dichroic beamsplitter 1334 has a wavelength cutoff between the excitation and emission wavelength, the dichroic mirror 1334 now acts as a pass-band beam splitter for the emitted fluorescent light beam and a stopband filter for the excitation light. It transmits the emitted fluorescent light while reflecting reflected excitation light and any ambient light entering the light path through the objective lens window. Emitted light passing through the dichroic beamsplitter 1334 then passes through an emission filter 1335, the purpose of which is further explained in the description associated with FIG. 20. Light exiting emission filter 1335 then passes through planoconvex sensor lens 1336, where it is focused onto the surface of a photo-sensor 1337 which is surface mounted to PCB 1302 and is protected from electrical noise by Faraday cage 1306.

The above described optical pathways may be repeated in multiple (e.g. five) channels, with the potential to detect any fluorescent emission band. A second (control) channel having control excitation LED 1311, planoconvex excitation lens 1312, excitation filter 1313, dichroic beamsplitter 1314, objective lens 1310, control emission filter 1315, planoconvex sensor lens 1316, and control photodiode 1317. Outputs from both photodiodes are amplified by three-stage trans-impedance amplifiers built into the board next to the photodiodes and grounded to an embedded microprocessor on the sensor PCB via carefully shielded pins from the amplifiers.

In one arrangement, as exemplified by the use of fluorescein and Texas Red as fluorophores, excitation LED 1331 is a 470 nm LED with band-pass excitation filter 1333 for delivering essentially monochromatic light of 485 ± 12 nm used for the target channel and a 590 nm LED 1311 with band pass filter 1313 was used for the control channel. The excitation LEDs are modulated or "strobed" on and off using a strobe rate of 130 Hz to filter AC power-related noise at 50 or 60 Hz and at harmonic frequencies associated with fluorescent overhead illumination, also filtering phantom signal related to stray ambient light and electrical noise that may be present at 30 or 60 Hz. As described above, local feedback sensors are used to monitor and stabilize source LED output intensity. Detection monitoring of fluorophore emission is coordinated with movement on rails of the detector head under power of a stepper motor controlled by a host controller. An embedded microprocessor and associated circuitry in the detector head is provided with RAM memory, ROM memory, an A-D converter, a three-stage trans-impedance amplifier, and signal processing and command sequence firmware to handle these functions.

Each of the photo-sensors 1317 and 1337 are mounted on a common PCB 1302. The output signal legs from each of these photo-sensors are connected directly to a pre-amp or first stage of respective tri-stage trans-impedance amplifiers (not shown). PCB 1302 makes extensive use of hardware noise-reduction components, in particular an embedded ground plane and a Faraday Cage 1306 to minimize the unwanted effects of any RF or electromagnetic interference on the input signals. The amplifier is shielded from electronic noise by a Faraday cage, a bypass capacitor, a signal conditioning preamplifier, a separate ground plane, a metallized detector head housing, or a combination thereof, and the amplifier is in close electrical proximity to the sensor. Optical signal acquisition, preconditioning, amplification and digitization is controlled by an autonomous daemon operating in a shielded environment. The combination of these hardware noise-reduction elements with optical data acquisition, digitization and processing method under local control in the detection head, leads to a detector design which is essentially immune from the effects of unwanted noise. The tri-stage amplifier may be configured for a gain of up to 1014, and is selectably configured for gain of 102, 103, 106, 1010, or 1012, as desired.

We have surprisingly found that packaging of signal processing in the scanning head achieves an isolated, low noise environment with improved signal-to-noise ratio and sensitivity by minimizing signal pathlengths and permitting effective use of Faraday shielding where necessary, such as around the sensor diode leads and at the junction between the excitation and sensor circuit boards. Optionally the detector housing may be fabricated from aluminum or coated with a conductive polymer and grounded to further shield the internal electronics from unwanted interference. Advantageously, higher signal amplification is realized in this environment,

FIG. 14 is a schematic view of the internal optical components of a fluorescence detector head 1300, showing the external optical interface with optical windows in a microassay cartridge. Unconventionally, multiple independent optic pathways or "channels" are formed in a single detection head and share electronic PCBs and downstream signal processing circuitry, but excitation optics are mounted on one circuit board and detection optics on another to reduce noise interference. The two boards are electrically coupled by a corner mounted pin junction and are electronically isolated using bypass capacitors mounted on separate ground planes.

Shown in FIG. 14 is the optical transition for the excitation of a fluorophore in a detection or sample well (1403) embedded within a microassay cartridge 1402. The head is a scanning head and moves across microassay cartridge 1402 (double arrow). Light from excitation LED 1331 on PCB 1301 is collimated by lens 1332 and made essentially monochromatic by band-pass filter 1333. As described above, an LED intensity control loop is formed by reflecting collimated light off light sampler mirror 1338 through neutral density filter 1339 to LED intensity detector 1340. Any fluorophore or fluorophores in detection well 1403 (whether the control or the target fluorophore) are excited by incident light 1420 focused on the sample by objective lens 1330. In FIG. X, the emission of the fluorophore(s) is collected by objective lens 1330 and transmitted to sensor 1337 after passing through dichroic beamsplitter 1334, emission filter 1335 and sensor lens 1336. Sensor 1337 is in direct electrical contact with the base of a high gain transistor that amplifies the output signal and is shielded in a Faraday cage. The emitted fluorescent light is generally at a longer wavelength according to the Stokes shift of the fluorophore, enabling the emitted light to pass through dichroic bandpass mirror 1334 and emission band-pass filter 1335 without losses. The light returned from sample chamber 1403a to objective lens 1330 is thus a mixture of emitted and reflected fluorescence 1421 and reflected excitation light 1420. Light traps (not shown) are provided to capture stray reflections. Reflected light 1420 does not pass dichroic mirror 1334 and is returned to the source, and does not interfere with the measurement of emission intensity at sensor 1337. The optic elements of a single channel, including excitation source, source collimating lens, excitation filter, dichroic mirror, objective lens, excitation filter, sensor lens, and detector with amplifier make up an optics module having an essentially monochromatic source wavelength and a highly specific sensor for detecting fluorescence at a particular wavelength characteristic of the target (or control) fluorophore. One optics module or channel may be used for an assay target, the other module for a control channel. Tandem mounted optics channels may be used to collect data on a plurality of fluorophores, where electrical processing is multiplexed through an embedded microprocessor under control of a resident daemon before transmission to the host instrument. As shown, each of the two channels shares circuitry on each of the two circuit boards, but has separate optics. Optionally, additional channels may be incorporated into the detector head by a process of duplication of the optical elements shown.

The microassay cartridge 1402 is movable (double arrow) relative to detector head 1300 and motorization of the detector head or cartridge tray or mounting chassis permits scanning: a transect across cartridge 1402 permits measurements to be made on sample chamber 1403 for example. By using multiple detection optics modules mounted side-by-side in a detector head, the sample chambers can be scanned for multiple fluorophores in series.

According to one arrangement, the excitation electronics are mounted on a printed circuit board (1301) and the detection electronics are mounted on a second PCB (1302). An edge-connector 1304 electrically joins the boards. Faraday cage 1306 protects the sensor and associated high gain amplifier from stray electromagnetic noise. The temperature of Peltier thermal pump can be ramped during scanning, for example as in a FRET melt determination with temperature and motor functions under control of the host controller while optical data is acquired by the embedded processor in the detection head in an autonomous process.

### Assay Validation and Quality Control

Serendipitously, the autonomous detector head functions of the host instrument of the invention can be multiplexed in dual head and multi-head detectors containing separate optical channels for detection of individual fluorophores, such that each channel comprises an LED for irradiating excitation light, at least one lightpath having an excitation filter, emission filter, dichroic mirror tuned to enable the detection of emissions from a fluorophore in a defined passband, an objective lens for condensing said excitation light and for collecting said emissions, a sensor for receiving any passband emissions, and a high gain amplifier for amplifying the output from the sensor, wherein each LED is configured to irradiate light in a frequency range so that the irradiation frequencies of the channels do not overlap and each optical channel is configured so that the emission passbands of the channels do not overlap. Furthermore, each optical channel is configured with an LED intensity control circuit to modify LED intensity during operation, as described above.

For assay validation, two sensor channels (or more) are provided for monitoring two or more fluorophores, the two sensor channels are configured so that the emission passbands from each fluorophore do not overlap. In a preferred arrangement, a first detection channel is for the purpose of detecting a target signal and a second detection channel is for the purpose of detecting an internal process control signal, and an assay result is reported if and only if a valid internal process control signal is reported.

This system has proved useful in validation of assay protocols calling for paired collection of "biplex" or multiplex target and process control signals. Where, as for FDA CLIA waiver requirements, both target and process control templates are amplified in parallel, a positive process control signal must be present before an assay result on a test sample can be reported or billed. In the absence of a detectable process control signal, any target signal detected is not a valid result. If this condition is met, under the Clinical Laboratory Improvement Amendments of 1988 (CLIA), regulations governing simple, low-risk tests can be waived and the tests performed without oversight in physicians' offices and various other locations. In order to meet these CLIA waiver requirements, it is necessary that the fluorescence detector be able to detect not only the presence, for example, of a target infectious organism amplified by PCR but also of an endogenous human control organism co-existing with the target or an endogenous human gene and amplified by the same PCR reaction or a PCR reaction conducted in parallel in the instrument. For example, the process control may be a human mitochondrial gene, and in preferred arrangement of the invention, the process control is the MTOC2 gene, which encodes for the mitochondrial cytochrome c oxidase subunit 2.

The detection system can be configured for wavelengths in the UV, visible region, and near infrared spectrum. Available light sources having near monochromatic output, filters, chromophores and fluorophores allow for tuning excitation and emission passbands in the range of 300 to 900 nm. For applications in fluorescence detection mode, which is one of the preferred operating modes, the apparatus can be configured for specific fluorescence dyes with excitation spectrum in the UV and visible spectrum and for emission in the UV, visible and near infrared spectrum. While a red shift is more typical, up-converting fluorophores may also be used.

Inputs into the embedded microprocessor are multiplexed so that several target analytes and internal process controls may be assayed simultaneously. The detector head is provided with at least two or more optical channels, each having independent excitation optics and emission optics which are operative at discrete wavelengths. White excitation light is not used to eliminate possible crosstalk between different fluorophores in a multiplexed assay, such as when a target fluorophore and internal control fluorophore are mixed in a common liquid sample.

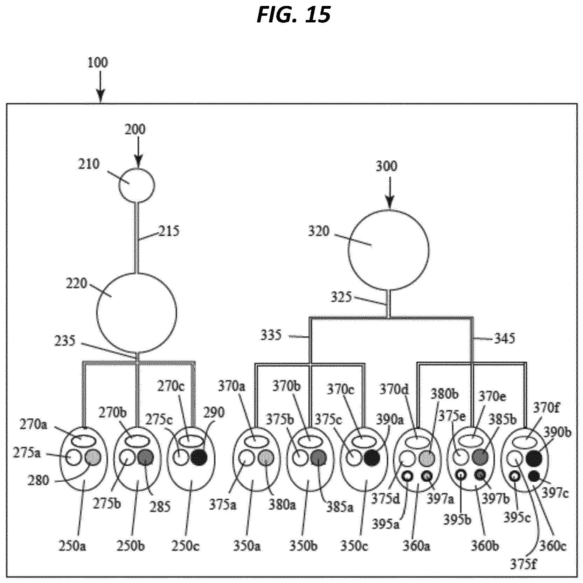

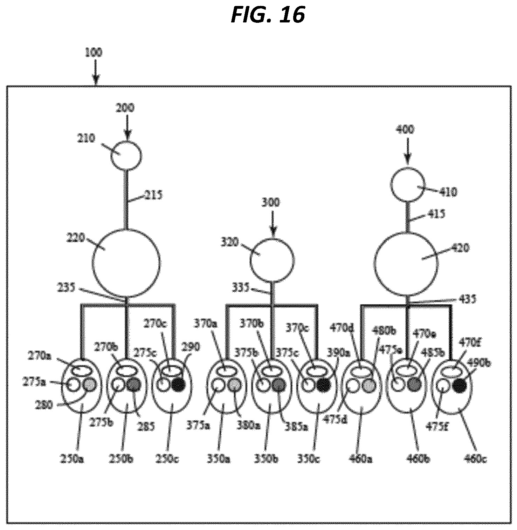

Good laboratory practice standards also require validation of diagnostic test results with positive and negative assay controls, which are typically run as external controls. In a vast improvement over the state of the art, the microassay cartridges of the present invention are provided with integrated positive and negative controls. FIGS. 15 and16 illustrate the details of certain arrangements of the positive and negative control circuits of the invention, integrated into generalized microfluidic assay circuits. FIG.15 is a schematic view of device 100 illustrating one arrangement of the invention. Microfluidic device 100 has two independent assay circuits: test assay circuit 200 and control assay circuit 300. Test assay circuit 200 includes sample inlet port 210 in fluid communication with microfluidic channel 215 and sample extraction chamber 220. Sample extraction chamber 220 is in fluid communication with downstream channel 235 and one or more test assay wells. In this arrangement, microfluidic channel 235 is in fluid communication with three test assay wells, 250a, 250b, and 250c, though one of skill in the art will appreciate that test assay circuit 200 may include any number of assay wells. Assay wells 250a, 250b, and 250c contain all reagents necessary to perform a molecular assay (e.g. PCR), and to detect the presence or absence of an assay signal (e.g. a fluorescent signal). Each assay well contains enzyme mix 270a, 270b, or 270c, the composition of which is identical. The enzyme mix contains the enzyme(s) and other reagents necessary for amplification of the target template and the process control template. Each assay well further contains process control primer/probe mix, 275a, 275b, or 275c, the composition of which is also identical. The process control primer/probe mix contains primers and probe suitable for the amplification and detection of the process control template. Each assay well further contains a unique target primer/probe mix suitable for the amplification and detection of a unique target template, distinguished in FIG. 15 by different colors. In this arrangement, assay well 250a comprises target sequence 1 primer/probe mix 280, assay well 250b contains target sequence 2 primer/probe mix 285, and assay well 250c contains target sequence 3 primer/probe mix 290. While this arrangement of the invention is configured to detect three test target sequences, it will be readily appreciated to one of skill in the art, that any number of target sequences may be assayed by increasing or decreasing the number of assay wells and target sequence primer/probe mixes of the invention.

Control assay circuit 300 of microfluidic device 100 includes control buffer chamber 320 in fluid communication with downstream microfluidic channel 325. In one arrangement, control buffer chamber 320 contains an empty buffer solution devoid of any biological material, e.g. nucleic acids. Microfluidic channel 325 is split into two control channels, negative control channel 335 and positive control channel 345. Negative control channel 335 is in fluid communication with negative control assay wells, 350a, 350b, and 350c. In this arrangement, the negative control channel is in fluid communication with three assay wells, though one of skill in the art will appreciate that the negative control circuit may comprise any number of assay wells. Each negative control assay well corresponds to one of the unique test assay wells. Negative control assay wells 350a, 350b, and 350c contain the same reagents for performing a molecular assay and detecting the presence or absence of a process control template and a target template as do the test assay wells. Negative control assay wells 350a, b, and c contain enzyme mix, 370a, 370b, and 370c, respectively. The composition of each of these enzyme mixes is identical in each assay well. The enzyme mix contains the enzyme(s) and other reagents necessary for amplification of a target sequence and a process control sequence. Assay wells 350a, b, and c further contain process control primer/probe mix, 375a, 375b, and 375c. The composition of each of these internal control primer/probe mixes is also identical in each assay well. The process control primer probe mix contains primers and probe suitable for the amplification and detection of the process control sequence. Each assay well further contains a unique target sequence primer/probe mix. In this arrangement, assay well 350a contains target sequence 1 primer/probe mix 380a, assay well 350b contains target sequence 2 primer/probe mix 385a, and assay well 350c contains target sequence 3 primer/probe mix 390a. Each of target sequence primer/probe mixes 380a, 385a, and 390a contains the primers and probes necessary to amplify and detect a unique target sequence of interest. The primer/probe of mix 380a is identical to that of mix 280, while those of mix 385a and 390a are identical to those of mix 285 and 290, respectively.

Positive control channel 345, in turn, is in fluid communication with positive control assay wells, 360a, 360b, and 360c. In this arrangement, the positive control channel is in fluid communication with three assay wells, though one of skill in the art will appreciate that the positive control circuit may comprise any number of assay wells. Each positive control assay well corresponds to a unique test assay well and a unique negative control assay well. As with their corresponding test assay wells, positive control assay wells 360a, 360b, and 360 contain all reagents necessary for performing a molecular assay and to detect the presence or absence of target and process control sequences. Importantly, the positive control wells are embedded with an exogenous sample of the target nucleic acid template. Each positive control assay well contains enzyme mix, 370d, 370e, or 370f, the composition of which is identical in each assay well. The enzyme mix contains the enzyme and reagents necessary for amplification of a target and an process control sequence. Each assay wells 360a, b, and c further contains process control primer/probe mix, 375d, 375e, and 375f, the composition of which is also identical in each assay well. The process control primer/probe mix contains primers and probe suitable for the amplification and detection of the process control target. Each assay well further contains a unique target sequence primer/probe mix. In this arrangement, assay well 360a comprises target sequence 1 primer/probe mix 380b, assay well 360b comprises target sequence 2 primer/probe mix 385b, and assay well 360c comprises target sequence 3 primer/probe mix 390b. Each target sequence primer/probe mixes 380b, 385b, and 390b contains the primers and probe necessary to amplify and detect a unique target sequence of interest. The primers and probe of mix 380b are identical to those of mix 280, while those of mix 385b and 390b are identical to those of mix 285 and 290, respectively. Each positive control assay well also contains an embedded process control template sample, herein designated as 395a, 395b, and 395c. The embedded process control template sample contains a known amount of the process control template nucleic acid and is identical in each positive control assay well. Each positive control assay well further contains an embedded target sequence template sample, herein designated as 397a, 397b, or 397c. In this arrangement, target sequence template sample 397a contains a known amount of the target sequence 1 nucleic acid template, while target sequence template samples 397b and 397c contain known amounts of target sequence 2 and target sequence 3 nucleic acid templates, respectively. While in this arrangement of the invention, each target sequence is represented by a single corresponding positive control assay well, it will be appreciated by one of skill in the art that multiple positive control assay wells may be contemplated for a given target sequence, for example, wells containing different concentrations of a given target template. Such positive controls are useful, for example, in generating standard curves for quantitative PCR analysis.

FIG. 16 depicts an alternative configuration of the control assay circuit of the present invention. In this arrangement, the configuration of test circuit 200 is identical to that described in FIG. 15, while the configuration of negative control circuit 300 and positive control circuit 400 differs in that they are not in fluid communication, but are, instead, represented by independent fluid circuits. All reagents contained in test and negative control assay well are identical to those described for FIG. 15. Positive control sample circuit 400 includes positive control sample port 410 in fluid communication with microfluidic channel 415 and downstream sample extraction chamber 420. Positive control assay wells 460a, 460b, and 460c contain the same enzyme mix samples (470d, e, and f), process control primer/probe mixes (475d, 475e, and 475f), and target primer/probe mixes (480b, 485b, and 490b) as described in FIG. 15. However, positive control assay wells do not contain embedded nucleic acid template samples. In the practice of this arrangement, the user supplies the positive control templates from an external sample source, which is introduced into positive control channel 400 through sample port 410. The positive control sample is processed in extraction chamber 420 and extracted nucleic acids are analyzed in assay wells 460a, 460b, and 460c by any of the methods described herein. In another arrangement, non-viable positive control template sample is pre-loaded into sample port 410 during manufacture of the microfluidic cartridge. The non-viable positive control sample may include killed bacteria, plasmid DNA, or the like. The pre-loaded positive control sample undergoes identical extraction and amplification as described for the test samples above.

In practice, the user applies a test sample to be assayed for the target sequences of interest to the sample port of microfluidic device. The sample enters the downstream extraction chamber, where nucleic acids are extracted for PCR by any means known in the art. The extracted nucleic acid sample enters test assays wells for amplification and detection with the reagents and primer/probe mixes described above. The devices of this arrangement are configured to assay for the presence or absence of three unique test sequences in parallel and each unique amplification reaction is biplexed for the co-amplification of target and process control templates. For each unique target assay run on the device, corresponding positive and negative controls are run in parallel in the integrated control circuit(s), precluding the need to run additional external quality controls.

Results from the positive and negative control assays may be used as further criteria for validation of test assay results. For example, to validate a positive test assay result, criteria may be set that require the fluorescent signal produced in the negative control assay wells to fall below a threshold value, indicating that the positive test signal is not due to system contamination with exogenous template. Likewise, to validate a negative test assay result, criteria may be set that require the fluorescent signal produced in the positive control assay wells to exceed a threshold value, confirming the integrity of the test reagents, primers, and probes. Thus, methods of the invention include methods for validating a test assay result that include reporting a test assay as valid if and only if the following three criteria are met: 1) the process control signal is positive, 2) the negative control signal is negative, and the 3) the positive control signal is positive.

Other arrangements include methods of validating test results and of scoring results as positive or negative for target sequences by directly comparing fluorescent signals generated in the target and assay wells. Further details of these methods are made with reference to FIG. 15. In one arrangement, the process control sequence is detected by device 100 using a first fluorescent signal while test target sequences are detected using a second fluorescent signal. Direct comparisons between the first and second fluorescent signals may be made in the following five validation or scoring steps for a diagnostic assay, each of which is based on an arbitrary validity ratio set by the end user: 1) To validate the integrity of the process control assay, the first fluorescent signals (reporting the process control signal) from positive control wells 360a, 360b, and 360c are compared to those of negative control wells 350a 350b, and 350c. In one arrangement, a valid result is reported only if the positive control signals are -2.5X greater than those of the negative control signals; 2) To validate the integrity of the target assays, the second fluorescent signals (reporting the target signal) from positive control wells 360a, 360b, and 360c are compared to those of negative control wells 350a 350b, and 350c. In one arrangement, a valid result is reported only if the positive control signals are ~5X greater than those of the negative control wells; 3) To validate the integrity of the extraction process, the first fluorescent signals (reporting the process control signal) from test assay wells 250a, 250b, and 250c are compared to those of negative control wells 350a 350b, and 350c. A valid result is reported only if the test assay signals are at least ~2X greater than those of the negative control wells; 4) To validate the integrity of a positive test assay results (i.e. to rule-out false positives due to contamination), the first fluorescent signals and/or second fluorescent signals of negative control wells 350a, 350b, and 350c are compared to signal levels from the same wells prior amplification (i.e. background) and a valid result is reported only if the assay signal post-amplification does not increase substantially over background; 5) To score a test assay signal as positive or negative for the test analyte, the second fluorescent signals in test assay wells 250a, 250b, and 250c are compared to those of negative control wells 350a, 350b, and 350c. A test assay is reported as positive if the test signals are at least ~3X greater than the negative control wells and negative if the test signals are less than ~3X greater than the negative control wells. It will be appreciated by the skilled artisan that the validity ratios set above are arbitrary and that many alternative values may be appropriate for any given diagnostic assay depending upon many factors unique to the particular assays.

In yet another arrangement, scan data may be used to determine whether assay wells have been successfully filled with test sample. Assay wells are scanned "pre-fill", while dry, and "post-fill", prior to amplification. Comparison of the "pre-fill" and "post-fill" fluorescent signals may be used to determine whether the well has been adequately filled with test sample. For example, a well showing a lower fluorescent signal post-fill may have failed to fill adequately, indicating that any assay result is likely invalid. Advantageously, we have discovered that the time required to scan a cartridge can be greatly reduced by a factory calibration process that pre-detects the position of each well in the cartridge. During factory calibration, a continuous scan is taken of a cartridge and the number of stepper motor pulses required to locate each well position from a "home position" is stored as calibration data in non-volatile memory in the detector head firmware. In operation, the detector head performs a "discrete scan" by stepping to each of these calibrated positions, taking optical data only at these positions. By eliminating the need of the detector head to locate each individual well during a scan, the time to perform a scan of all nine wells is reduced to around less than a second, a clear improvement in the state of the art.

## Claims

1. A method of performing a sample assay with a microassay cartridge (1100) said cartridge (1100) comprising
a) a first molded housing (1101) having a pneumatic circuit enclosed therein;
b) a second molded housing (1102) having a hydraulic circuit enclosed therein;
c) a sample inlet (1104) for receiving a test sample, wherein said sample inlet (1104) is in fluid communication with said hydraulic circuit;
d) a laminate layer interposed between said first molded housing (1101) and said second molded housing (1102), said laminate layer (1301, 1302, 1303) comprising a plurality of pneumohydraulic membranes (1301, 1302, 1303) in fluid communication with said pneumatic circuit and said hydraulic circuit;
e) an assay well assembly (1201) in fluid communication with said hydraulic circuit;
f) an array of pneumatic ports (1115) defining a pneumatic interface, each port for receiving a pneumatic pulse applied thereto, said ports (1115) are in fluid communication with said pneumatic circuit, wherein said pneumatic pulse is a positive pressure pulse or a negative pressure pulse; and
wherein said cartridge (1100) is enabled such that said pneumohydraulic membranes (1301, 1302, 1303) are operably controlled by said pneumatic pulses,
wherein said hydraulic circuit comprises a test assay circuit (200) and a control assay circuit (300),wherein said test assay circuit (200) is in fluid communication with said sample inlet (1104) and said control assay circuit (300) not in fluid communication with said sample inlet (1104), wherein said control assay
circuit (300) comprises a positive control assay circuit and a negative control assay circuit,
wherein the method is **characterized in that**
for each unique target assay run the corresponding test assay and a positive and negative control assay are executed in parallel in the respective test assay circuit (200), positive control assay circuit and a negative control assay circuit.

2. The method of claim 1, wherein said positive control assay circuit and said negative control assay circuit are in fluid communication, or
wherein said positive control assay circuit and said negative control assay circuit are not in fluid communication.

3. The method of claim 1, wherein each of said test assay circuit, said positive control assay circuit (200) and said negative control assay circuit (300) are in fluid communication with a plurality of assay wells (250a-c, 350a-c, 360a-c) each.

4. The method of claim 3, wherein said plurality of assay wells (250a-c, 350a-c, 360a-c) is up to three, or is three.

5. The method of any of claims 3 or 4, wherein each of said plurality of wells (250a-c, 350a-c, 360a-c) is configured to perform a process control.

6. The method of any of claims 3 or 4, wherein said positive control assay wells (300) comprise a positive control nucleic acid template.

7. The method of claim 1, further comprising a nucleic acid capture assembly (1130) in fluid communication with said hydraulic circuit.

8. The method of claim 7, wherein said nucleic acid capture assembly (1130) comprises a hollow housing member (1131) and a nucleic acid capture membrane (1133b) disposed therein, wherein optionally said nucleic acid capture membrane (1132) comprises silica fibers.

9. The method of claim 8, further comprising an upper support medium (1133A) and a lower support medium (1133B) disposed in the interior of said housing member (1131), wherein said nucleic acid capture membrane (1132) is interposed between said upper support medium (1133A) and said lower support medium (1133B).

10. The method of claim 9, wherein said upper and lower support media (1133A, 1133B) are POREX® frits or polypropylene washers.

11. The method of claim 1, wherein said assay well assembly (1201) comprises a PCR well layer configured with a plurality of wells (250a-c, 350a-c, 360a-c), wherein each of said wells comprises all reagents necessary for PCR amplification and fluorescent detection of any resultant amplicon.

12. The method of claim 1, wherein said first molded housing (1101) comprises optical detection windows (1106) overlaying the assay well assembly (1201), wherein said optical detection windows (1106) are formed from a diamond-shaped opening on an upper surface of said first molded housing (1101) and a smaller diamond shaped opening on a lower surface of said first molded housing (1101), and wherein the sides of the optical windows angle inward from upper to lower surfaces of first molded housing (1101).

## Patentansprüche

1. Verfahren zur Durchführung eines Probenassays mit einer Mikroassay Kartusche (1100), wobei die Kartusche (1100) umfasst
a) ein erstes geformtes Gehäuse (1101) mit einem darin eingeschlossenen pneumatischen Kreislauf;
b) ein zweites geformtes Gehäuse (1102) mit einem darin eingeschlossenen hydraulischen Kreislauf;
c) einen Probeneinlass (1104) zur Aufnahme einer Testprobe, wobei der Probeneinlass (1104) in Fluidverbindung mit dem hydraulischen Kreislauf steht;
d) eine Laminatschicht, die zwischen dem ersten geformten Gehäuse (1101) und dem zweiten geformten Gehäuse (1102) angeordnet ist, wobei die Laminatschicht (1301, 1302, 1303), eine Vielzahl von pneumohydraulischen Membranen (1301, 1302, 1303) aufweist, die in Fluidverbindung mit dem pneumatischen Kreislauf und dem hydraulischen Kreislauf stehen;
e) eine Assaywellanordnung (1201), die in Fluidverbindung mit dem hydraulischen Kreislauf steht
f) eine Anordnung von pneumatischen Anschlüssen (1115), die eine pneumatische Schnittstelle definieren, wobei jeder Anschluss zum Empfangen eines daran angelegten pneumatischen Impulses dient, wobei die Anschlüsse (1115) in Fluidverbindung mit dem pneumatischen Kreislauf stehen, wobei der pneumatische Impuls ein Überdruckimpuls oder ein Unterdruckimpuls ist; und
wobei die Kartusche (1100) so ausgestaltet ist, dass die pneumohydraulischen Membranen (1301, 1302, 1303) von den pneumatischen Impulsen betriebsfähig gesteuert werden,
wobei der hydraulische Kreislauf einen Test-Assay-Kreislauf (200) und einen Kontroll-Assay-Kreislauf (300) umfasst, wobei der Test-Assay-Kreislauf (200) in Fluidverbindung mit dem Probeneinlass (1104) steht und der Kontroll-Assay-Kreislauf 300) nicht
in Fluidverbindung mit dem Probeneinlass (1104), wobei der Kontroll-Assay-Kreislauf (300) einen Positiv Kontroll-Assay-Kreislauf und eine Negativ Kontroll-Assay-Kreislauf aufweist,
wobei das Verfahren **dadurch gekennzeichnet ist, dass**
für jeden einzelnen einzigartigen Zielassay-Lauf der entsprechende Testassay und ein positiver und negativer Kontrollassay parallel in dem jeweiligen Test-Assay-Kreislauf (200), Positiv Kontroll-Assay-Kreislauf und Negativ Kontroll-Assay-Kreislauf ausgeführt werden.

2. Das Verfahren nach Anspruch 1,
wobei der Positiv Kontroll-Assay-Kreislauf und der Negativ Kontroll-Assay-Kreislauf in Fluidkommunikation stehen, oder
wobei der Positiv Kontroll-Assay-Kreislauf und der Negativ Kontroll-Assay-Kreislauf nicht in Fluidverbindung stehen.

3. Das Verfahren nach Anspruch 1, wobei jede des Test-Assay-Kreislaufs, des Positiv Kontroll-Assay-Kreislaufs (200) und des Negativ Kontroll-Assay-Kreislaufs (300) in Fluidverbindung mit einer Mehrzahl von Assay-Wells (250a-c, 350a-c, 360a-c) stehen.

4. Das Verfahren nach Anspruch 3, wobei die Vielzahl von Assay-Wells (250a-c, 350a-c, 360a-c) bis zu drei ist oder drei beträgt.

5. Das Verfahren nach einem der Ansprüche 3 oder 4, wobei jede der Vielzahl von Wells (250a-c, 350a-c, 360a-c) konfiguriert ist um eine Prozesskontrolle durchzuführen.

6. Das Verfahren nach einem der Ansprüche 3 oder 4, wobei die Positiv-Kontroll-Assay-Wells (300) eine Positivkontroll-Nukleinsäure-Matrize enthalten.

7. Das Verfahren nach Anspruch 1, ferner umfassend eine Nukleinsäure-Einfanganordnung (1130), die in Fluidverbindung mit dem hydraulischen Kreislauf steht.

8. Das Verfahren nach Anspruch 7, wobei die Nukleinsäure-Einfanganordnung (1130) ein hohles Gehäuseelement (1131) und eine darin angeordnete Nukleinsäure-Einfangmembran (1133b) umfasst, wobei optional die Nukleinsäure-Einfangmembran (1132) Siliziumdioxid-Fasern umfasst.

9. Das Verfahren nach Anspruch 8, ferner umfassend ein oberes Trägermedium (1133A) und ein unteres Trägermedium (1133B), die im Inneren des Gehäuseelements (1131) angeordnet sind, wobei die Nukleinsäure Einfangmembran (1132) zwischen dem oberen Trägermedium (1133A) und dem unteren Trägermedium (1133B) angeordnet ist.

10. Das Verfahren nach Anspruch 9, wobei das obere und untere Trägermedium (1133A, 1133B) POREX®-Fritten oder Polypropylen-Scheiben sind.

11. Das Verfahren nach Anspruch 1, wobei die Assay-Wellanordnung (1201) eine PCR-Wellschicht umfasst, die mit einer Vielzahl von Wells (250a-c, 350a-c, 360a-c), wobei jede der Wells alle Reagenzien enthält, die für die PCR-Amplifikation und den Fluoreszenznachweis eines resultierenden Amplikons erforderlich sind.

12. Das Verfahren nach Anspruch 1, wobei das erste geformte Gehäuse (1101) optische Detektionsfenster (1106) umfasst, die die Assay-Wellanordnung (1201) überlagern, wobei die optischen Detektionsfenster (1106) aus einer rautenförmigen Öffnung auf einer oberen Fläche des ersten geformten Gehäuses (1101) gebildet sind und einer kleineren rautenförmigen Öffnung auf einer unteren Oberfläche des ersten geformten Gehäuses (1101) gebildet sind, und wobei die Seiten der optischen Fenster von der oberen zur unteren Fläche des ersten geformten Gehäuses (1101) nach innen abgewinkelt sind.

## Revendications

1. Procédé de réalisation d'un dosage d'échantillon avec une cartouche de microdosage (1100), ladite cartouche (1100) comprenant
a) un premier boîtier moulé (1101) dans lequel est enfermé un circuit pneumatique ;
b) un deuxième boîtier moulé (1102) dans lequel est enfermé un circuit hydraulique ;
c) une entrée d'échantillon (1104) pour recevoir un échantillon d'essai, où ladite entrée d'échantillon (1104) est en communication fluidique avec ledit circuit hydraulique ;
d) une couche stratifiée interposée entre ledit premier boîtier moulé (1101) et ledit deuxième boîtier moulé (1102), ladite couche stratifiée (1301, 1302, 1303) comprenant une pluralité de membranes pneumohydrauliques (1301, 1302, 1303) en communication fluidique avec ledit circuit pneumatique et ledit circuit hydraulique ;
e) un ensemble de puits de dosage (1201) en communication fluidique avec ledit circuit hydraulique ;
f) un réseau d'orifices pneumatiques (1115) définissant une interface pneumatique, chaque orifice étant destiné à recevoir une impulsion pneumatique qui lui est appliquée, lesdits orifices (1115) sont en communication fluidique avec ledit circuit pneumatique, dans lequel ladite impulsion pneumatique est une impulsion de pression positive ou une impulsion de pression négative ; et
dans lequel ladite cartouche (1100) est activée de telle sorte que lesdites membranes pneumohydrauliques (1301, 1302, 1303) soient commandées de manière fonctionnelle par lesdites impulsions pneumatiques,
dans lequel ledit circuit hydraulique comprend un circuit de dosage d'essai (200) et un circuit de dosage de témoin (300), dans lequel ledit circuit de dosage d'essai (200) est en communication fluidique avec ladite entrée d'échantillon (1104) et ledit circuit de dosage de témoin (300) n'est pas en communication fluidique avec ladite entrée d'échantillon (1104), dans lequel ledit circuit de dosage de témoin (300) comprend un circuit de dosage de témoin positif et un circuit de dosage de témoin négatif,
dans lequel le procédé est **caractérisé en ce que**
pour chaque exécution de dosage cible unique, le dosage d'essai correspondant et un dosage de témoins positif et négatif sont exécutés en parallèle dans le circuit de dosage d'essai respectif (200), le circuit de dosage de témoin positif et un circuit de dosage de témoin négatif.

2. Procédé de la revendication 1, dans lequel ledit circuit de dosage de témoin positif et ledit circuit de dosage de témoin négatif sont en communication fluidique, ou
dans lequel ledit circuit de dosage de témoin positif et ledit circuit de dosage de témoin négatif ne sont pas en communication fluidique.

3. Procédé de la revendication 1, dans lequel chacun dudit circuit de dosage d'essai, dudit circuit de dosage de témoin positif (200) et dudit circuit de dosage de témoin négatif (300) est en communication fluidique avec chacun d'une pluralité de puits de dosage (250a-c, 350a- c, 360a-c).

4. Procédé de la revendication 3, dans lequel ladite pluralité de puits de dosage (250a-c, 350a-c, 360a-c) est jusqu'à trois, ou est de trois.

5. Procédé de l'une des revendications 3 ou 4, dans lequel chacun de ladite pluralité de puits (250a-c, 350a-c, 360a-c) est configuré pour réaliser un témoin de processus.

6. Procédé de l'une des revendications 3 ou 4, dans lequel lesdits puits de dosage de témoin positif (300) comprennent une matrice d'acide nucléique de témoin positif.

7. Procédé de la revendication 1, comprenant en outre un ensemble de capture d'acide nucléique (1130) en communication fluidique avec ledit circuit hydraulique.

8. Procédé de la revendication 7, dans lequel ledit ensemble de capture d'acide nucléique (1130) comprend un élément de boîtier creux (1131) et une membrane de capture d'acide nucléique (1133b) disposée à l'intérieur, dans lequel éventuellement ladite membrane de capture d'acide nucléique (1132) comprend des fibres de silice.

9. Procédé de la revendication 8, comprenant en outre un milieu de support supérieur (1133A) et un milieu de support inférieur (1133B) disposés à l'intérieur dudit élément de boîtier (1131), dans lequel ladite membrane de capture d'acide nucléique (1132) est interposée entre ledit milieu de support supérieur (1133A) et ledit milieu de support inférieur (1133B).

10. Procédé de la revendication 9, dans lequel lesdits milieux de support supérieur et inférieur (1133A, 1133B) sont des frittes POREX® ou des rondelles de polypropylène.

11. Procédé de la revendication 1, dans lequel ledit ensemble de puits de dosage (1201) comprend une couche de puits PCR configurée avec une pluralité de puits (250a-c, 350a-c, 360a-c), dans lequel chacun desdits puits comprend tous les réactifs nécessaires pour l'amplification PCR et la détection fluorescente de tout amplicon résultant.

12. Procédé de la revendication 1, dans lequel ledit premier boîtier moulé (1101) comprend des fenêtres de détection optique (1106) recouvrant l'ensemble de puits de dosage (1201), dans lequel lesdites fenêtres de détection optique (1106) sont formées à partir d'une ouverture en forme de losange sur une surface supérieure dudit premier boîtier moulé (1101) et d'une plus petite ouverture en forme de losange sur une surface inférieure dudit premier boîtier moulé (1101), et dans lequel les côtés des fenêtres optiques sont inclinés vers l'intérieur de la surface supérieure à la surface inférieure du premier boîtier moulé (1101).
